# EUROPÄISCHE PATENTSCHRIFT

(11) **EP 3 536 461 B1**
(45) Veröffentlichungstag und Bekanntmachung des Hinweises auf die Patenterteilung: **25.11.2020**
(21) Anmeldenummer: 18160652.6
(22) Anmeldetag: 08.03.2018
(51) Int. Cl.: B25F 3/00, B25F 5/00

(54) **VERFAHREN ZUM TYPABHÄNGIGEN BETREIBEN EINER ELEKTRISCHEN ANTRIEBSEINHEIT UND SYSTEM**
METHOD FOR TYPE-DEPENDENT OPERATION OF AN ELECTRICAL DRIVE UNIT AND SYSTEM
PROCÉDÉ DE FONCTIONNEMENT DÉPENDANT DU TYPE D'UNE UNITÉ D'ENTRAÎNEMENT ÉLECTRIQUE ET SYSTÈME

(43) Veröffentlichungstag der Anmeldung: 11.09.2019
(73) Patentinhaber: Andreas Stihl AG & Co. KG, 71336 Waiblingen (DE)
(72) Erfinder: TRINKLE, Simon, 73667 Kaisersbach (DE); WACHTEL, Andreas, 71336 Waiblingen (DE); ROITSCH, Tommy, 71334 Waiblingen (DE)
(74) Vertreter: Patentanwälte Ruff, Wilhelm, Beier, Dauster & Partner mbB

(56) Entgegenhaltungen:
- EP-A1- 2 353 539
- EP-A1- 2 521 206
- EP-A1- 2 529 894
- FR-A1- 3 039 087
- US-A1- 2016 227 694

## Beschreibung

### ANWENDUNGSGEBIET UND STAND DER TECHNIK

Die Erfindung bezieht sich auf ein Verfahren zum typabhängigen Betreiben einer elektrischen Antriebseinheit und ein System. Ein derartiges Verfahren ist zum Beispiel aus FR 3 039 087 A1 bekannt.

### AUFGABE UND LÖSUNG

Der Erfindung liegt als Aufgabe die Bereitstellung eines Verfahrens zum Betreiben einer elektrischen Antriebseinheit zugrunde, das verbesserte Eigenschaften aufweist, insbesondere mehr Funktionalitäten. Des Weiteren liegt der Erfindung als Aufgabe die Bereitstellung eines Systems zugrunde.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein System mit den Merkmalen des Anspruchs 11 gelöst. Vorteilhafte Weiterbildungen und/oder Ausgestaltungen der Erfindung sind in den abhängigen Ansprüchen beschrieben.

Die Erfindung bezieht sich auf ein, insbesondere automatisches, Verfahren zum typabhängigen beziehungsweise typspezifischen Betreiben einer elektrischen Antriebseinheit. Die Antriebseinheit ist zum, insbesondere mechanischen, Koppeln, insbesondere durch einen Benutzer, und, insbesondere mechanischen, Antreiben einer, insbesondere gekoppelten, Werkzeugeinheit ausgebildet. Die, insbesondere gekoppelte, Werkzeugeinheit ist aus einer Menge beziehungsweise einer Gruppe von verschiedenen Typen von Werkzeugeinheiten ausgewählt, insbesondere durch den Benutzer. Die Menge weist mindestens eine rotatorische Werkzeugeinheit und mindestens eine nicht-rotatorische Werkzeugeinheit auf. Das erfindungsgemäße Verfahren weist die Schritte auf: a) Antreiben, insbesondere automatisches Antreiben, beziehungsweise Inbetriebnehmen einer gekoppelten Werkzeugeinheit durch die Antriebseinheit, b) Erfassen, insbesondere automatisches Erfassen, beziehungsweise Detektieren von Betriebsdaten der Antriebseinheit während des Antreibens beziehungsweise des Schritts a). c) Bestimmen, insbesondere automatisches Bestimmen, beziehungsweise Erkennen oder Ermitteln oder Berechnen basierend auf den erfassten Betriebsdaten, ob die gekoppelte Werkzeugeinheit, insbesondere entweder, eine, insbesondere die, rotatorische Werkzeugeinheit oder eine, insbesondere die, nicht-rotatorische Werkzeugeinheit ist. d) Steuern, insbesondere automatisches Steuern, der Antriebseinheit in, insbesondere entweder, einer Rotationssteuerart, wenn beziehungsweise falls die gekoppelte Werkzeugeinheit als eine rotatorische Werkzeugeinheit bestimmt ist, oder einer Nicht-Rotationssteuerart, wenn beziehungsweise falls die gekoppelte Werkzeugeinheit als eine nicht-rotatorische Werkzeugeinheit bestimmt ist.

Das Verfahren beziehungsweise die typabhängige Steuerart, insbesondere die Rotationssteuerart und die Nicht-Rotationssteuerart, der Antriebseinheit ermöglicht, die gekoppelte Werkzeugeinheit optimal zu betreiben und/oder mindestens ein typspezifisches Problem beziehungsweise mindestens einen typspezifischen Problemfall der gekoppelten Werkzeugeinheit zu erkennen und somit zu lösen oder sogar von vornherein zu vermeiden. Die typabhängige Steuerart der Antriebseinheit wird durch das Bestimmen des Typs der gekoppelten Werkzeugeinheit, insbesondere rotatorische Werkzeugeinheit oder nicht-rotatorische Werkzeugeinheit, ermöglicht.

Insbesondere ermöglicht das Verfahren ein mittelbares beziehungsweise selbstständiges oder autonomes Bestimmen des Typs der gekoppelten Werkzeugeinheit, insbesondere durch die Antriebseinheit. Anders formuliert: der Typ der gekoppelten Werkzeugeinheit braucht oder kann nicht durch den Benutzer mitgeteilt zu werden und/oder unmittelbar, insbesondere mittels Erkennens eines Typidentifikationselements an der gekoppelten Werkzeugeinheit wie eines RFID-Transponders durch eine Identifikationserfassungseinrichtung an der Antriebseinheit, bestimmt zu werden. Insbesondere brauchen nicht unmittelbar Betriebsdaten der gekoppelten Werkzeugeinheit erfasst zu werden. Es kann ausreichen, über das Erfassen der Betriebsdaten der Antriebseinheit mittelbar Betriebsdaten der gekoppelten Werkzeugeinheit zu erfassen, insbesondere zu miterfassen. In anderen Worten: es kann ausreichen, Betriebsdaten nur der Antriebseinheit unmittelbar zu erfassen.

Die Betriebsdaten können, insbesondere jeweils, einen Wert und/oder einen Betrag aufweisen oder sein.

Die elektrische Antriebseinheit kann einen Elektromotor zum Antreiben der gekoppelten Werkzeugeinheit aufweisen. Insbesondere kann die Antriebseinheit als Antriebsmotoreinheit bezeichnet werden. Die Betriebsdaten können Betriebsdaten des Elektromotors sein.

Zusätzlich oder alternativ kann die Antriebseinheit einen elektrischen Energiespeicher, insbesondere eine Batterie und/oder einen Akkumulator, zur Versorgung der Antriebseinheit beziehungsweise ihres Elektromotors, soweit vorhanden, mit elektrischer Energie aufweisen.

Insbesondere kann die Antriebseinheit als Akkuantriebseinheit bezeichnet werden. Anders formuliert: die Antriebseinheit kann elektrizitätsnetzunabhängig ausgebildet sein.

Insbesondere können/kann die Antriebseinheit und/oder die gekoppelte Werkzeugeinheit handgeführt ausgebildet sein, insbesondere handgetragen und/oder bodengeführt. Handgeführt, insbesondere handgetragen, kann bedeuten, dass die Antriebseinheit und/oder die gekoppelte Werkzeugeinheit eine maximale Masse von 50 Kilogramm (kg), insbesondere von 20 kg, insbesondere von 10 kg, aufweisen können/kann.

Die Antriebseinheit kann zum lösbaren Koppeln mit der Werkzeugeinheit ausgebildet sein, insbesondere zum zerstörungsfreien und/oder werkzeugfreien Koppeln. Das Koppeln kann als Anbauen oder Befestigen bezeichnet werden. Insbesondere kann die Werkzeugeinheit als Anbauwerkzeugeinheit bezeichnet werden.

Zusätzlich oder alternativ können/kann die Antriebseinheit und/oder die Werkzeugeinheit eine Kupplung zum Antreiben der gekoppelten Werkzeugeinheit aufweisen.

Insbesondere kann die Antriebseinheit zum Erzeugen einer Bewegung, insbesondere einer Antriebswelle der Antriebseinheit, und zum Übertragen der erzeugten Bewegung auf die gekoppelte Werkzeugeinheit, insbesondere eine Werkzeugwelle der Werkzeugeinheit, ausgebildet sein.

Die verschiedenen Typen von Werkzeugeinheiten können verschieden aufgebaut sein. In anderen Worten: die verschiedenen Typen brauchen nicht baugleich zu sein. Insbesondere können die verschiedenen Typen von Werkzeugeinheiten ermöglichen, verschiedene Arbeiten auszuführen. Die Menge von verschiedenen Typen kann mindestens eine Garten- und/oder Forstwerkzeugeinheit, insbesondere mehrere Garten- und/oder Forstwerkzeugeinheiten, aufweisen oder sein.

Insbesondere kann die rotatorische Werkzeugeinheit zur Bewegung, insbesondere eines Werkzeugs der Werkzeugeinheit, in, insbesondere nur, einer Bewegungsrichtung, insbesondere einer Drehrichtung, ausgebildet sein. Die Bewegung kann die Form einer geschlossenen Kurve, insbesondere eines Kreises, beschreiben.

Die nicht-rotatorische Werkzeugeinheit kann zur Bewegung, insbesondere eines Werkzeugs der Werkzeugeinheit, in zwei, insbesondere entgegengesetzten, Bewegungsrichtungen ausgebildet sein. Anders formuliert: die nicht-rotatorische Werkzeugeinheit kann zu einer Umkehr der Bewegungsrichtung beziehungsweise einer Hin- und Her-Bewegung, insbesondere des Werkzeugs, ausgebildet sein. Die Bewegung kann die Form einer nicht-geschlossenen Kurve beschreiben. Insbesondere kann die nicht-rotatorische Werkzeugeinheit als reziprokative oder translatorische Werkzeugeinheit bezeichnet werden.

Insbesondere können die typabhängigen Steuerarten, insbesondere Rotationssteuerart oder nicht Rotationssteuerart, voneinander verschieden sein.

Zuvor, insbesondere zum Antreiben, Erfassen und/oder Bestimmen, kann die Antriebseinheit in einer Erfassungssteuerart gesteuert werden. Im Detail kann die Antriebseinheit dazu ausgebildet sein, durch eine Unterbrechung einer Versorgung der Antriebseinheit mit elektrischer Energie und/oder ein Ziehen des elektrischen Energiespeichers, soweit vorhanden, in die Erfassungssteuerart versetzt und/oder in der Erfassungssteuerart gesteuert zu werden, insbesondere bei einem Wechsel der Werkzeugeinheit/en an der Antriebseinheit. Zusätzlich oder alternativ kann die Antriebseinheit dazu ausgebildet sein, insbesondere falls die Antriebseinheit nicht in die Erfassungssteuerart versetzt worden ist und/oder die, insbesondere gekoppelte, Werkzeugeinheit erfasst und/oder bestimmt worden ist, in der Steuerart gesteuert zu werden, insbesondere bei einem Neustart beziehungsweise einem, insbesondere nächsten, Hochlaufen der Antriebseinheit, insbesondere bei keinem Wechsel der Werkzeugeinheit an der Antriebseinheit.

Insbesondere kann das Antreiben beziehungsweise der Schritt a) und/oder das Steuern beziehungsweise der Schritt d) durch den Benutzer ausgelöst werden, insbesondere durch Betätigen mindestens eines Bedienelements beziehungsweise eines Gashebels wie mindestens einer Drucktaste. Insbesondere kann durch den Benutzer eine Drehzahl, insbesondere eine Soll-Drehzahl, der Antriebseinheit und/oder der Werkzeugeinheit vorgegeben beziehungsweise bestimmt werden.

Insbesondere kann die Antriebseinheit drehzahlgeregelt sein. Dies kann bedeuten, dass wenn eine Ist-Drehzahl der Antriebseinheit von einer Soll-Drehzahl abweicht, ein Strom, eine Spannung und/oder eine Leistung der Antriebseinheit nachgeregelt werden kann. Äußere Einflüsse auf beziehungsweise durch die gekoppelte Werkzeugeinheit können beziehungsweise werden sich typischerweise zuerst auf die Drehzahl und, insbesondere nur, folglich auf den Strom, die Spannung und/oder die Leistung auswirken. Von einer Einstellung eines Reglers, insbesondere eines Drehzahlreglers, der Antriebseinheit kann es abhängen, welche Größe, insbesondere Drehzahl, Spannung, Strom und/oder Leistung, sinnvoller für das Erfassen und/oder das Bestimmen sein kann.

Der Schritt c) kann zeitgleich mit dem Schritt b) und/oder zeitlich nach diesem ausgeführt werden. Der Schritt d) kann zeitgleich mit dem Schritt c) und/oder zeitlich nach diesem ausgeführt werden.

In einer Weiterbildung der Erfindung weist der Schritt b) auf: Erfassen, insbesondere automatisches Erfassen, von Betriebsdaten in Form eines zeitlichen Drehzahl-, Strom-, Spannungs- und/oder Leistungsverlaufs der Antriebseinheit. Des Weiteren weist der Schritt c) auf: Bestimmen, insbesondere automatisches Bestimmen, dass die gekoppelte Werkzeugeinheit, insbesondere entweder, eine rotatorische Werkzeugeinheit ist, wenn beziehungsweise falls der erfasste zeitliche Drehzahl-, Strom-, Spannungs- und/oder Leistungsverlauf frei von einer periodischen Schwingung, insbesondere einer periodischen Drehzahl-, Strom-, Spannungs- und/oder Leistungsschwingung, ist, oder eine nicht-rotatorische Werkzeugeinheit ist, wenn beziehungsweise falls der erfasste zeitliche Drehzahl-, Strom-, Spannungs- und/oder Leistungsverlauf eine periodische Schwingung aufweist.

Typischerweise kann bei der nicht-rotatorischen Werkzeugeinheit eine Umkehr der Bewegungsrichtung, insbesondere des Werkzeugs, soweit vorhanden, entstehen. Diese starke translatorische Verzögerung und Beschleunigung in den Umkehrpunkten kann in der gekoppelten Antriebseinheit eine Erhöhung des Lastmoments bewirken. Folglich kann sich bei zeitlich konstantem Antriebsmoment, insbesondere bei konstanter Drehzahl, konstantem Strom, konstanter Spannung und/oder konstanter Leistung, die periodische Schwingung auf dem Drehzahl-, Strom-, Spannungs- und/oder Leistungsverlauf beobachten lassen, insbesondere mit der doppelten Frequenz der Werkzeugbewegung. Insbesondere kann die periodische Schwingung bei, bis auf die Schwingung, konstanter beziehungsweise mittlerer Drehzahl erfasst werden. In anderen Worten: die Schwingung braucht oder kann nicht bei beziehungsweise während einem Hochlaufen der Antriebseinheit erfasst zu werden. Zusätzlich oder alternativ kann als periodische Schwingung eine Schwingung mit einer Minimalamplitude gleich oder größer als eine, insbesondere vorgegebene, Grenzamplitude gewertet werden.

Somit kann das Kriterium periodische Schwingung, insbesondere Vorhandensein oder Nicht-Vorhandensein einer periodischen Schwingung, zur Unterscheidung rotatorische Werkzeugeinheit oder nicht-rotatorische Werkzeugeinheit dienen. Kriterium kann als Unterscheidungskriterium bezeichnet werden.

In einer Weiterbildung der Erfindung, falls beziehungsweise wenn in Schritt c) bestimmt wird, dass die gekoppelte Werkzeugeinheit eine nicht-rotatorische Werkzeugeinheit ist, wobei die Typen eine erste Werkzeugeinheit mit einer ersten, insbesondere konstanten, Übersetzung und eine zweite Werkzeugeinheit mit einer zweiten, von der ersten verschiedenen, insbesondere konstanten, Übersetzung aufweisen, werden im Schritt b) Betriebsdaten in Form eines zeitlichen Drehzahl-, Strom-, Spannungs- und/oder Leistungsverlaufs, insbesondere in Form eines zeitlichen Drehzahlverlaufs, der Antriebseinheit erfasst, insbesondere automatisch. Des Weiteren werden im Schritt c) eine Frequenz einer, insbesondere der, periodischen Schwingung, insbesondere einer periodischen Drehzahl-, Strom-, Spannungs- und/oder Leistungsschwingung, und eine, insbesondere mittlere, Drehzahl aus dem erfassten zeitlichen Drehzahl-, Strom-, Spannungs- und/oder Leistungsverlauf bestimmt, insbesondere automatisch. Außerdem wird im Schritt c) eine Übersetzung aus der bestimmten Frequenz und der bestimmten Drehzahl bestimmt beziehungsweise berechnet, insbesondere automatisch. Weiter wird im Schritt c) bestimmt, insbesondere automatisch, dass die gekoppelte Werkzeugeinheit, insbesondere entweder, eine erste Werkzeugeinheit ist, wenn beziehungsweise falls die bestimmte Übersetzung in einem ersten Übersetzungsbereich liegt, oder eine zweite Werkzeugeinheit ist, wenn beziehungsweise falls die bestimmte Übersetzung in einem zweiten, von dem ersten verschiedenen Übersetzungsbereich liegt. Zudem wird im Schritt d) die Antriebseinheit, insbesondere entweder, in einer ersten Werkzeugsteuerart, wenn beziehungsweise falls die gekoppelte Werkzeugeinheit als eine erste Werkzeugeinheit bestimmt ist, oder einer zweiten Werkzeugsteuerart gesteuert, insbesondere automatisch, wenn beziehungsweise falls die gekoppelte Werkzeugeinheit als eine zweite Werkzeugeinheit bestimmt ist.

Insbesondere kann die erste Werkzeugeinheit oder die zweite Werkzeugeinheit ein Getriebe mit der Übersetzung aufweisen.

Somit kann das Kriterium Übersetzung, insbesondere Übersetzungswert, zur Unterscheidung erste Werkzeugeinheit oder zweite Werkzeugeinheit dienen.

Die Betriebsdaten für das Kriterium Übersetzung können zeitlich vor, zeitgleich mit und/oder zeitlich nach den Betriebsdaten für das Kriterium rotatorische oder nicht-rotatorische Werkzeugeinheit beziehungsweise periodische Schwingung, soweit vorhanden, erfasst werden. Insbesondere können die Betriebsdaten dieselben sein. Zusätzlich oder alternativ kann die Unterscheidung erste Werkzeugeinheit oder zweite Werkzeugeinheit zeitlich vor, zeitgleich mit und/oder zeitlich nach der Unterscheidung rotatorische Werkzeugeinheit oder nicht-rotatorische Werkzeugeinheit bestimmt werden. Anders formuliert: die Reihenfolge der Kriterien kann, braucht aber nicht der Reihenfolge der Ansprüche beziehungsweise ihrer Schritte zu entsprechen.

In einer Ausgestaltung der Erfindung ist die erste Werkzeugeinheit eine Heckenschere, insbesondere mit Messern, beziehungsweise ein Heckenschneider und die erste Werkzeugsteuerart ist eine Heckenscherensteuerart. Zusätzlich oder alternativ ist die zweite Werkzeugeinheit ein Spezialernter, insbesondere mit mindestens einem Rechen, beziehungsweise ein Olivenernter, und die zweite Werkzeugsteuerart ist eine Spezialerntersteuerart.

Typischerweise kann die Heckenschere eine erste Übersetzung von 3,5 bis 6,5 aufweisen, insbesondere von 4,5 bis 5,5. Der Spezialernter kann eine zweite Übersetzung von 10 bis 12 aufweisen, insbesondere von 11. In anderen Worten: die erste Übersetzung und die zweite Übersetzung können sich um einen Faktor von 1,5 bis 3,5, insbesondere von 2 bis 3, insbesondere 2,5, unterscheiden.

Insbesondere kann ein Problemfall der Heckenschere ein Blockierfall beziehungsweise Verhakungsfall, insbesondere der Messer sein. Die Heckenscherensteuerart kann ermöglichen, diesen Blockierfall zu erkennen und somit zu lösen. Insbesondere kann eine Öffnung, insbesondere der Messer, ausgeführt werden, insbesondere durch eine Bewegungsumkehr, insbesondere vor Erreichen von üblichen beziehungsweise maximalen Umkehrpunkten. Somit kann ein Blockierfall beziehungsweise ein Verhakungsfall, insbesondere der Messer in einem Ast, selbstständig beziehungsweise ohne einen Benutzereingriff gelöst werden. Zusätzlich oder alternativ kann die Heckenscherensteuerart ermöglichen, eine Drehzahlanpassung zum Betreiben der Heckenschere mit einer optimalen Drehzahl auszuführen. Somit kann ein optimales Schnittergebnis erreicht werden. Weiter zusätzlich oder alternativ kann die Heckenscherensteuerart ermöglichen, eine Richtungsumkehr bei, insbesondere jedem, Neustart auszuführen. Somit kann die Übersetzung, insbesondere das Getriebe, soweit vorhanden, geschont und somit seine Haltbarkeit erhöht werden. Weiter zusätzlich oder alternativ kann die Heckenscherensteuerart ermöglichen, eine Freigabe hoher Lastsbeziehungsweise Leistungspitzen auszuführen beziehungsweise hohe Lastspitzen freizugeben. Somit kann eine hohe Schnittperformance erreicht werden.

Kurz: die Heckenscherensteuerart kann mindestens ein Merkmal aus der Menge bestehend aus Blockierfall, Drehzahlanpassung, Drehrichtungsumkehr und/oder Lastfreigabe aufweisen.

Die Spezialerntersteuerart kann ermöglichen, eine Feststellgaslogik auszuführen. Somit kann ein komfortabler Dauerbetrieb erreicht werden. Insbesondere braucht der Benutzer nicht dauerhaft das Bedienelement zu betätigen.

In einer Weiterbildung der Erfindung, falls beziehungsweise wenn in Schritt c) bestimmt wird, dass die gekoppelte Werkzeugeinheit eine rotatorische Werkzeugeinheit ist, wobei die Typen eine Säge, insbesondere einen Hochentaster, aufweisen, werden im Schritt b) Betriebsdaten in Form eines zeitlichen Drehzahl-, Strom-, Spannungs- und/oder Leistungsverlaufs, insbesondere in Form eines zeitlichen Leistungsverlaufs, der Antriebseinheit erfasst, insbesondere automatisch. Des Weiteren wird im Schritt c) bestimmt, insbesondere automatisch, dass die gekoppelte Werkzeugeinheit eine Säge ist, wenn beziehungsweise falls der erfasste zeitliche Drehzahl-, Strom-, Spannungs- und/oder Leistungsverlauf eine dynamische Schwankung aufweist, insbesondere eine dynamische Drehzahl-, Strom-, Spannungs- und/oder Leistungsschwankung. Außerdem wird im Schritt d) die Antriebseinheit in einer Sägesteuerart gesteuert, insbesondere automatisch, wenn beziehungsweise falls die gekoppelte Werkzeugeinheit als eine Säge bestimmt ist.

Typischerweise braucht bei der Säge, insbesondere mit einer Sägekette, nicht immer jeder Zahn der Säge im vollen Eingriff zu sein, insbesondere beim Trennen von Holz. Jeder neue Eingriff eines Sägezahns in das Holz kann eine hohe Verzögerung bewirken. Folglich kann sich, insbesondere bei zeitlich konstanter Drehzahl, zeitlich konstantem Strom, zeitlich konstanter Spannung und/oder zeitlich konstanter Leistung, die dynamische Schwankung auf dem Drehzahl-, Strom-, Spannungs- und/oder Leistungsverlauf einstellen. Insbesondere kann die dynamische Schwankung bei, bis auf die Schwankung, konstanter Drehzahl erfasst werden. In anderen Worten: die Schwankung braucht oder kann nicht bei beziehungsweise während einem Hochlaufen der Antriebseinheit erfasst zu werden. Zusätzlich oder alternativ kann als dynamische Schwankung eine Schwankung mit einer Minimalamplitude gleich oder größer als eine, insbesondere vorgegebene, Grenzamplitude gewertet werden. Weiter zusätzlich oder alternativ kann als dynamische Schwankung eine Schwankung mit einer Frequenz aus einem, insbesondere vorgegebenen, Frequenzbereich gewertet werden.

Die Sägesteuerart kann ein hohes Anlaufmoment, insbesondere beim nächsten Hochlaufen, ermöglichen. Somit kann ein kraftvoller Start, insbesondere bei aufliegender Kette auf dem Ast, erreicht werden. Zusätzlich oder alternativ kann die Sägesteuerart einen Sanftanlauf, insbesondere beim nächsten Hochlaufen, ermöglichen. Somit kann ein geringes Drehmoment, insbesondere im Handgelenk des Benutzers, und/oder ein komfortabler Anlauf erreicht werden. Weiter zusätzlich oder alternativ kann die Sägesteuerart ein hohes Bremsmoment ermöglichen. Weiter zusätzlich oder alternativ kann die Sägesteuerart ermöglichen, einen Boost, insbesondere für kurze Schnitte mit hoher Leistung, freizugeben. Somit kann ein Risiko einer Verletzung benachbarter Äste reduziert oder sogar vermieden werden.

Kurz: die Sägesteuerart kann mindestens ein Merkmal aus der Menge bestehend aus hohes Anlaufmoment, Sanftanlauf, hohes Bremsmoment und/oder Boostfreigabe aufweisen.

Somit kann das Kriterium dynamische Schwankung, insbesondere Vorhandensein oder Nicht-Vorhandensein einer dynamischen Schwankung, zur Unterscheidung Säge oder Nicht-Säge dienen.

Die Betriebsdaten für das Kriterium dynamische Schwankung können zeitlich vor, zeitgleich mit und/oder zeitlich nach den Betriebsdaten für das Kriterium rotatorische oder nicht-rotatorische Werkzeugeinheit beziehungsweise periodische Schwingung, soweit vorhanden, erfasst werden. Insbesondere können die Betriebsdaten dieselben sein. Zusätzlich oder alternativ kann die Unterscheidung Säge oder Nicht-Säge zeitlich vor, zeitgleich mit und/oder zeitlich nach der Unterscheidung rotatorische Werkzeugeinheit oder nicht-rotatorische Werkzeugeinheit bestimmt werden. Anders formuliert: die Reihenfolge der Kriterien kann, braucht aber nicht der Reihenfolge der Ansprüche beziehungsweise ihrer Schritte zu entsprechen.

In einer Weiterbildung der Erfindung, falls beziehungsweise wenn in Schritt c) bestimmt wird, dass die gekoppelte Werkzeugeinheit eine rotatorische Werkzeugeinheit ist und dass die erfassten Betriebsdaten keine dynamische Schwankung aufweisen, wobei die Typen ein Blasgerät aufweisen, werden im Schritt b) Betriebsdaten in Form eines zeitlichen Drehzahlverlaufs und eines zeitlichen Strom-, Spannungs- und/oder Leistungsverlaufs der Antriebseinheit erfasst, insbesondere automatisch. Des Weiteren wird im Schritt c) bestimmt, insbesondere automatisch, dass die gekoppelte Werkzeugeinheit kein Blasgerät ist, wenn beziehungsweise falls der erfasste zeitliche Strom-, Spannungs- und/oder Leistungsverlauf eine Änderung, insbesondere eine Strom-, Spannungs- und/oder Leistungsänderung, bei zeitlich konstanter Drehzahl aufweist. Außerdem wird im Schritt d) die Antriebseinheit in einer Nicht-Blasgerätsteuerart gesteuert, insbesondere automatisch, wenn beziehungsweise falls die gekoppelte Werkzeugeinheit als kein Blasgerät bestimmt ist.

Typischerweise braucht oder kann das Blasgerät in der normalen Anwendung keine äußere Last erfahren. Folglich kann bei einer Änderung, insbesondere bei konstanter Drehzahl, das Blasgerät als gekoppelte Werkzeugeinheit ausgeschlossen werden. In anderen Worten: die Änderung braucht oder kann nicht bei beziehungsweise während einem Hochlaufen der Antriebseinheit erfasst zu werden. Anders formuliert: es braucht kein Blasgerät erkannt zu werden, sondern es kann das Blasgerät lediglich ausgeschlossen werden. Zusätzlich oder alternativ kann als Änderung eine Änderung gleich oder größer als eine, insbesondere vorgegebene, Grenzänderung und/oder eine Änderung über eine, insbesondere vorgegebene, Minimalzeitdauer gewertet werden. In anderen Worten: bei dem Blasgerät können in geringem Ausmaß Änderungen möglich sein, insbesondere wenn ein Blasrohr des Blasgeräts dynamisch geöffnet und geschlossen wird, beispielsweise beim Versuch Schmutz vom Boden zu lösen mit dem Blasrohr. Diese Änderungen können aber typischerweise gering, insbesondere kleiner als die Grenzänderung, und/oder nur von kurzer Zeitdauer sein. Insbesondere kann das Blasgerät als Laubbläser bezeichnet werden.

Somit kann das Kriterium Änderung, insbesondere Vorhandensein oder Nicht-Vorhandensein einer Änderung, zur Unterscheidung Nicht-Blasgerät oder, insbesondere möglicherweise, Blasgerät dienen.

Die Betriebsdaten für das Kriterium Änderung können zeitlich vor, zeitgleich mit und/oder zeitlich nach den Betriebsdaten für das Kriterium rotatorische oder nicht-rotatorische Werkzeugeinheit beziehungsweise periodische Schwingung und/oder das Kriterium dynamische Schwankung, soweit vorhanden, erfasst werden. Insbesondere können die Betriebsdaten dieselben sein. Zusätzlich oder alternativ kann die Unterscheidung Nicht-Blasgerät oder, insbesondere möglicherweise, Blasgerät zeitlich vor, zeitgleich mit und/oder zeitlich nach der Unterscheidung rotatorische Werkzeugeinheit oder nicht-rotatorische Werkzeugeinheit und/oder der Unterscheidung Säge oder Nicht-Säge, soweit vorhanden, bestimmt werden. Anders formuliert: die Reihenfolge der Kriterien kann, braucht aber nicht der Reihenfolge der Ansprüche beziehungsweise ihrer Schritte zu entsprechen.

In einer Weiterbildung der Erfindung, falls beziehungsweise wenn in Schritt c) bestimmt wird, dass die gekoppelte Werkzeugeinheit eine rotatorische Werkzeugeinheit ist und dass die erfassten Betriebsdaten keine dynamische Schwankung und eine Änderung bei zeitlich konstanter Drehzahl aufweisen, wobei die Typen eine Werkzeugeinheit mit einer flexiblen Werkzeugwelle aufweisen, werden im Schritt b) Betriebsdaten in Form eines zeitlichen Drehzahlverlaufs der Antriebseinheit erfasst, insbesondere automatisch. Des Weiteren wird im Schritt c) bestimmt, insbesondere automatisch, dass die gekoppelte Werkzeugeinheit eine Werkzeugeinheit mit einer flexiblen Werkzeugwelle ist, wenn beziehungsweise falls der erfasste zeitliche Drehzahlverlauf in beziehungsweise innerhalb einem bestimmten beziehungsweise vorgegebenen Drehzahlbereich mindestens einen Unterschwinger aufweist. Außerdem wird im Schritt d) die Antriebseinheit in einer Flexwellensteuerart gesteuert, insbesondere automatisch, wenn beziehungsweise falls die gekoppelte Werkzeugeinheit als eine Werkzeugeinheit mit einer flexiblen Werkzeugwelle bestimmt ist.

Typischerweise kann die Werkzeugeinheit beziehungsweise ihre flexible Werkzeugwelle bei starker Beschleunigung, insbesondere bei beziehungsweise während einem Hochlaufen, zu schwingen beginnen. Dieses Schwingen kann im Drehzahlverlauf erfasst beziehungsweise detektiert und/oder bestimmt werden, insbesondere bei einem Hochlaufen. In anderen Worten: der Unterschwinger braucht oder kann nicht bei konstanter Drehzahl der Antriebseinheit erfasst zu werden. Bei einer Werkzeugeinheit ohne flexible Werkzeugwelle, insbesondere mit einer starren Werkzeugwelle, braucht oder kann die Werkzeugwelle sich aufgrund ihrer höheren Steifigkeit nicht aufschwingen und/oder ein Getriebe, soweit vorhanden, kann zusätzlich die Schwingung dämpfen. Zusätzlich oder alternativ kann als Unterschwinger ein Unterschwinger mit einer Minimalhöhe gleich oder größer als eine, insbesondere vorgegebene, Grenzhöhe und/oder ein Unterschwinger mit einer Zeitdauer in einem, insbesondere vorgegebenen, Zeitdauerbereich gewertet werden. Die Zeitdauer kann ermöglichen, Fehlerkennungen durch äußere Belastungen bei einer Werkzeugeinheit ohne flexible Werkzeugwelle zu verhindern. Der Drehzahlbereich kann als Drehzahlband bezeichnet werden.

Die flexible Werkzeugwelle kann als Flexwelle bezeichnet werden. Insbesondere kann die Werkzeugeinheit mit der flexiblen Werkzeugwelle eine Sense mit gebogenem beziehungsweise gekrümmtem Schaft, ein Kantenschneider mit gebogenem beziehungsweise gekrümmtem Schaft oder ein Freischneider mit gebogenem beziehungsweise gekrümmtem Schaft, und insbesondere ohne Getriebe, sein.

Die Flexwellensteuerart kann ermöglichen, ein Betreiben mit einer hohen Drehzahl freizugeben beziehungsweise freizuschalten. Zusätzlich oder alternativ kann die Flexwellensteuerart eine Anpassung einer Kennlinie, insbesondere Leistung über Drehzahl, ermöglichen. Somit kann eine gute Rückmeldung an den Benutzer erreicht werden. Weiter zusätzlich oder alternativ kann die Flexwellensteuerart ermöglichen, eine Drehzahlbegrenzung zum Betreiben, insbesondere des Freischneiders mit gebogenem Schaft, und insbesondere ohne Getriebe, mit einer begrenzten Drehzahl auszuführen.

Kurz: die Flexwellensteuerart kann mindestens ein Merkmal aus der Menge bestehend aus Drehzahlfreigabe, Kennlinienanpassung und/oder Drehzahlbegrenzung aufweisen.

Somit kann das Kriterium Unterschwinger, insbesondere Vorhandensein oder Nicht-Vorhandensein eines Unterschwingers, zur Unterscheidung Werkzeugeinheit mit einer flexiblen Werkzeugwelle oder ohne flexible Werkzeugwelle dienen.

Die Betriebsdaten für das Kriterium Unterschwinger können zeitlich vor, zeitgleich mit und/oder zeitlich nach den Betriebsdaten für das Kriterium rotatorische oder nicht-rotatorische Werkzeugeinheit beziehungsweise periodische Schwingung, das Kriterium dynamische Schwankung und/oder das Kriterium Änderung, soweit vorhanden, erfasst werden. Insbesondere können die Betriebsdaten dieselben sein. Zusätzlich oder alternativ kann die Unterscheidung Werkzeugeinheit mit einer flexiblen Werkzeugwelle oder ohne flexible Werkzeugwelle zeitlich vor, zeitgleich mit und/oder zeitlich nach der Unterscheidung rotatorische Werkzeugeinheit oder nicht-rotatorische Werkzeugeinheit, der Unterscheidung Säge oder Nicht-Säge und/oder der Unterscheidung Nicht-Blasgerät oder, insbesondere möglicherweise, Blasgerät, soweit vorhanden, bestimmt werden. Anders formuliert: die Reihenfolge der Kriterien kann, braucht aber nicht der Reihenfolge der Ansprüche beziehungsweise ihrer Schritte zu entsprechen.

In einer Weiterbildung der Erfindung, falls beziehungsweise wenn in Schritt c) bestimmt wird, dass die gekoppelte Werkzeugeinheit eine rotatorische Werkzeugeinheit ist und dass die erfassten Betriebsdaten keine dynamische Schwankung, eine Änderung bei zeitlich konstanter Drehzahl und in einem bestimmten Drehzahlbereich keinen Unterschwinger aufweisen, wobei die Typen einen Faden-Freischneider oder einen ersten Schneideblatt-Freischneider, einen zweiten Schneideblatt-Freischneider oder eine bodengeführte Werkzeugeinheit aufweisen, werden im Schritt b) Betriebsdaten in Form eines zeitlichen Drehzahlverlaufs und eines zeitlichen Stromverlaufs der Antriebseinheit erfasst, insbesondere automatisch. Des Weiteren wird im Schritt c) ein Massenträgheitsmoment aus dem erfassten zeitlichen Drehzahlverlauf und dem erfassten zeitlichen Stromverlauf bestimmt beziehungsweise berechnet, insbesondere automatisch. Außerdem wird im Schritt c) bestimmt, insbesondere automatisch, dass die gekoppelte Werkzeugeinheit, insbesondere entweder, ein Faden-Freischneider oder ein erster Schneideblatt-Freischneider ist, wenn beziehungsweise falls das bestimmte Massenträgheitsmoment in einem ersten Massenträgheitsmomentbereich liegt, oder ein zweiter Schneideblatt-Freischneider ist, wenn beziehungsweise falls das bestimmte Massenträgheitsmoment in einem zweiten, von dem ersten verschiedenen Massenträgheitsmomentbereich liegt, oder eine bodengeführte Werkzeugeinheit ist, wenn beziehungsweise falls das bestimmte Massenträgheitsmoment in einem dritten, von dem ersten und zweiten verschiedenen Massenträgheitsmomentbereich liegt. Weiter wird im Schritt d) die Antriebseinheit in, insbesondere entweder, einer ersten Freischneidersteuerart, wenn beziehungsweise falls die gekoppelte Werkzeugeinheit als ein Faden-Freischneider oder ein erster Schneideblatt-Freischneider bestimmt ist, oder einer zweiten Freischneidersteuerart, wenn beziehungsweise falls die gekoppelte Werkzeugeinheit als ein zweiter Schneideblatt-Freischneider bestimmt ist, oder einer Bodensteuerart gesteuert, insbesondere automatisch, wenn beziehungsweise falls die gekoppelte Werkzeugeinheit als eine bodengeführte Werkzeugeinheit bestimmt ist.

Typischerweise können der erste Massenträgheitsmomentbereich und der zweite Massenträgheitsmomentbereich sich um einen Faktor von 1,5 bis 5, insbesondere von 2 bis 4, insbesondere 3, unterscheiden. Insbesondere kann der erste Massenträgheitsmomentbereich niedriger als der zweite Massenträgheitsmomentbereich sein. Zusätzlich oder alternativ können der erste Massenträgheitsmomentbereich und der dritte Massenträgheitsmomentbereich sich um einen Faktor von 1,5 bis 4, insbesondere von 2 bis 3, insbesondere 2,5, unterscheiden. Insbesondere kann der erste Massenträgheitsmomentbereich höher als der dritte Massenträgheitsmomentbereich sein.

Insbesondere können die Betriebsdaten für das Massenträgheitsmoment bei beziehungsweise während einem Hochlaufen, insbesondere der Drehzahl, der Antriebseinheit erfasst werden. In anderen Worten: die Betriebsdaten für das Massenträgheitsmoment brauchen oder können nicht bei konstanter Drehzahl der Antriebseinheit erfasst zu werden.

Der Faden-Freischneider kann ein Freischneider mit einem, insbesondere flexiblen beziehungsweise forminstabilen, Mähfaden sein. Zusätzlich oder alternativ kann der Schneideblatt-Freischneider ein Freischneider mit einem, insbesondere starren beziehungsweise formstabilen, Schneideblatt sein. Insbesondere kann der erste Schneideblatt-Freischneider ein, insbesondere zweiflügliges, Grasschneideblatt aufweisen. Zusätzlich oder alternativ kann der zweite Schneideblatt-Freischneider ein, insbesondere dreiflügliges, Dickichtmesser aufweisen. Weiter zusätzlich oder alternativ kann die bodengeführte Werkzeugeinheit eine Kehrwalze, eine Kehrbürste oder eine Bodenfräße sein.

Insbesondere kann die erste Freischneidersteuerart ermöglichen, eine Drehzahlbegrenzung zum Betreiben, insbesondere des Faden-Freischneiders, mit einer begrenzten Drehzahl auszuführen. Somit können geringe Schallwerte und/oder eine hohe Laufzeit, insbesondere des elektrischen Energiespeichers, soweit vorhanden, erreicht werden. Zusätzlich oder alternativ kann eine hohe Drehzahlsteifigkeit erreicht werden. Weiter zusätzlich oder alternativ kann die erste Freischneidersteuerart eine Anpassung von Beschleunigungsmomenten, insbesondere bei einem Hochlaufen, und/oder von Bremsmomenten, insbesondere bei einem Auslaufen, ermöglichen. Somit können gleiche Beschleunigungs- und/oder Bremszeiten für verschiedene Typen von Werkzeugeinheiten erreicht werden.

Kurz: die erste Freischneidersteuerart kann mindestens ein Merkmal aus der Menge bestehend aus Drehzahlbegrenzung und/oder Beschleunigungs- und/oder Bremsmomentanpassung aufweisen.

Die zweite Freischneidersteuerart kann ein kurzzeitiges Trudeln beim Gasspiel ermöglichen beziehungsweise freigeben oder erlauben. Somit kann ein, insbesondere von einer Antriebseinheit mit einem Verbrennungsmotor, gewohntes Verhalten erreicht werden. Zusätzlich oder alternativ kann die zweite Freischneidersteuerart eine Anpassung, insbesondere eine Erhöhung, von Beschleunigungsmomenten, insbesondere bei einem Hochlaufen, und/oder von Bremsmomenten, insbesondere bei einem Auslaufen, ermöglichen. Somit können gleiche Beschleunigungs- und/oder Bremszeiten für verschiedene Typen von Werkzeugeinheiten erreicht werden beziehungsweise Beschleunigungs- und/oder Bremszeiten eingehalten werden. Weiter zusätzlich oder alternativ kann die zweite Freischneidersteuerart ermöglichen, eine Freigabe hoher Last- beziehungsweise Leistungsspitzen auszuführen beziehungsweise hohe Lastspitzen freizugeben. Somit kann eine hohe Schnittperformance und/oder eine schnelle Wiederbeschleunigung erreicht werden.

Kurz: die erste Freischneidersteuerart kann mindestens ein Merkmal aus der Menge bestehend aus Trudelfreigabe, Beschleunigungs- und/oder Bremsmomentanpassung und/oder Lastfreigabe aufweisen.

Die Bodensteuerart kann einen Sanftanlauf, insbesondere beim nächsten Hochlaufen, ermöglichen, insbesondere der Kehrwalze oder der Kehrbürste, soweit vorhanden. Somit kann ein geringes Drehmoment, insbesondere im Handgelenk des Benutzers, und/oder ein komfortabler Anlauf erreicht werden. Zusätzlich oder alternativ kann die Bodensteuerart eine leichte Drehzahlbegrenzung ermöglichen, insbesondere der Bodenfräße, soweit vorhanden. Somit kann ein besserer Bodeneingriff erreicht werden. Weiter zusätzlich oder alternativ kann die Bodensteuerart eine Anpassung von Beschleunigungsmomenten, insbesondere bei einem Hochlaufen, und/oder von Bremsmomenten, insbesondere bei einem Auslaufen, ermöglichen. Somit können gleiche Beschleunigungs- und/oder Bremszeiten für verschiedene Typen von Werkzeugeinheiten erreicht werden.

Kurz: die Bodensteuerart kann mindestens ein Merkmal aus der Menge bestehend aus Sanftanlauf, Drehzahlbegrenzung und/oder Beschleunigungs- und/oder Bremsmomentanpassung aufweisen.

Somit kann das Kriterium Massenträgheitsmoment, insbesondere Massenträgheitsmomentwert, zur Unterscheidung Faden-Freischneider oder erster Schneideblatt-Freischneider, zweiter Schneideblatt-Freischneider oder bodengeführte Werkzeugeinheit dienen.

Die Betriebsdaten für das Kriterium Massenträgheitsmoment können zeitlich vor, zeitgleich mit und/oder zeitlich nach den Betriebsdaten für das Kriterium rotatorische oder nicht-rotatorische Werkzeugeinheit beziehungsweise periodische Schwingung, das Kriterium dynamische Schwankung, das Kriterium Änderung und/oder das Kriterium Unterschwinger, soweit vorhanden, erfasst werden. Insbesondere können die Betriebsdaten dieselben sein. Zusätzlich oder alternativ kann die Unterscheidung Faden-Freischneider oder erster Schneideblatt-Freischneider, zweiter Schneideblatt-Freischneider oder bodengeführte Werkzeugeinheit zeitlich vor, zeitgleich mit und/oder zeitlich nach der Unterscheidung rotatorische Werkzeugeinheit oder nicht-rotatorische Werkzeugeinheit, der Unterscheidung Säge oder Nicht-Säge, der Unterscheidung Nicht-Blasgerät oder, insbesondere möglicherweise, Blasgerät und/oder der Unterscheidung Werkzeugeinheit mit einer flexiblen Werkzeugwelle oder ohne flexible Werkzeugwelle, soweit vorhanden, bestimmt werden. Anders formuliert: die Reihenfolge der Kriterien kann, braucht aber nicht der Reihenfolge der Ansprüche beziehungsweise ihrer Schritte zu entsprechen.

In einer Ausgestaltung der Erfindung, falls beziehungsweise wenn in Schritt c) bestimmt wird, dass die gekoppelte Werkzeugeinheit ein Faden-Freischneider oder ein erster Schneideblatt-Freischneider ist, werden im Schritt b) Betriebsdaten in Form eines zeitlichen Leistungsverlaufs der Antriebseinheit erfasst, insbesondere automatisch. Des Weiteren wird im Schritt c) eine Last beziehungsweise eine Leistung aus dem erfassten zeitlichen Leistungsverlauf über dem erfassten zeitlichen Drehzahlverlauf bestimmt, insbesondere automatisch. Außerdem wird im Schritt c) bestimmt, insbesondere automatisch, dass die gekoppelte Werkzeugeinheit, insbesondere entweder, ein Faden-Freischneider ist, wenn beziehungsweise falls die bestimmte Last in einem ersten Lastbereich beziehungsweise Leistungsbereich liegt, oder ein erster Schneideblatt-Freischneider ist, wenn beziehungsweise falls die bestimmte Last in einem zweiten, von dem ersten verschiedenen Lastbereich beziehungsweise Leistungsbereich liegt. Weiter wird im Schritt d) die Antriebseinheit in, insbesondere entweder, einer Faden-Freischneidersteuerart, wenn beziehungsweise falls die gekoppelte Werkzeugeinheit als ein Faden-Freischneider bestimmt ist, oder einer Schneideblatt-Freischneidersteuerart gesteuert, insbesondere automatisch, wenn beziehungsweise falls die gekoppelte Werkzeugeinheit als ein erster Schneideblatt-Freischneider bestimmt ist.

Typischerweise können der erste Lastbereich und der zweite Lastbereich sich um einen Faktor von 1,5 bis 4, insbesondere von 2 bis 3, insbesondere 2,5, unterscheiden. Insbesondere kann der erste Lastbereich höher als der zweite Lastbereich sein. Insbesondere können der erste Lastbereich und der zweite Lastbereich jeweils ein Lastbereich über einem Drehzahlbereich sein, insbesondere ein Last- und Drehzahlflächenbereich. Der erste Lastbereich und der zweite Lastbereich können durch eine erste Grenzlinie voneinander getrennt sein. Zusätzlich kann der erste Lastbereich durch eine gegenüber der ersten Grenzlinie höhere zweite Grenzlinie begrenzt sein.

Insbesondere können die Betriebsdaten für die Last beziehungsweise die Last kann bei zeitlich konstanter Drehzahl erfasst und/oder bestimmt werden. In anderen Worten: die Betriebsdaten für die Last brauchen oder können nicht bei beziehungsweise während einem Hochlaufen, insbesondere der Drehzahl, der Antriebseinheit erfasst werden.

Das Kriterium Last kann in mindestens einer von drei Funktionen bewertet werden, insbesondere Grundlastbewertung ohne Belastung, Lastkollektiv Dauer mit Belastung, und/oder hohe Last.

Die Last beziehungsweise die Leistung, die insbesondere bei konstanter Drehzahl ohne Werkzeugeingriff, erfasst beziehungsweise bestimmt werden kann, kann hauptsächlich von einer Reibung im Getriebe, soweit vorhanden, der Werkzeugeinheit und/oder einem Widerstand der Luft abhängen. Diese Last kann als Grundlast bezeichnet werden. Typischerweise kann bei dem Faden-Freischneider die Luftlast und somit die Grundlast höher als bei dem ersten Schneideblatt-Freischneider sein.

Insbesondere kann die Grundlast wie folgt definiert sein beziehungsweise bestimmt werden: geringe Leistungsänderung, insbesondere kleiner als eine, insbesondere vorgegebene, Grenzänderung, für eine, insbesondere vorgegebene, Zeitdauer, insbesondere eine Minimalzeitdauer. Konstante Drehzahl für die Zeitdauer. Drehzahl gleich oder größer als eine, insbesondere vorgegebene, Grenzdrehzahl.

Während des Betriebs, insbesondere während eines Eingriffs der Werkzeugeinheit beziehungsweise eines Werkzeugs der Werkzeugeinheit, kann die Werkzeugeinheit beziehungsweise ihr Werkzeug belastet werden, wodurch die benötigte Leistung ansteigen kann. Anders formuliert: die, insbesondere benötigte, Leistung kann durch äußere Belastung aber niemals kleiner werden wie die Grundlast ohne Belastung. Diese Last kann als Lastkollektiv Dauer bezeichnet werden.

Insbesondere kann bei der Lastkollektiv Dauer ein Betriebspunkt Soll-Drehzahl gleich Ist-Drehzahl, aber Last beziehungsweise Leistung nicht konstant betrachtet werden. Dabei können die Leistungsanteile (bei eingeschwungener Drehzahl) hinsichtlich ihrer Höhe beziehungsweise Änderung im Vergleich zu einer Grenzlinie (Grundlastlinien) bewertet werden. Dabei kann eine Unterschreitung einer Grenzlinie um ein Vielfaches mehr gewertet werden wie eine Überschreitung, da diese in der Regel durch eine äußere Last hervorgerufen werden oder sein kann. Dadurch kann durch nur wenige geringe Leistungsanteile auf eine Werkzeugeinheit einer geringeren Leistungsklasse beziehungsweise eines niedrigeren Lastbereichs geschlossen werden.

Bei dem ersten Schneideblatt-Freischneider braucht nicht oder kann keine dauerhaft hohe Leistung abgenommen werden. Insbesondere kann die Leistung bei jedem Umkehrpunkt, insbesondere beim Mähen, kurz nach unten schwanken. Diese geringen Leistungsanteile können geringer sein als die Grundlast des Faden-Freischneiders bei dieser Drehzahl. Somit kann der erste Schneideblatt-Freischneider von dem Faden-Freischneider unterschieden werden. In anderen Worten: liegt die bestimmte Last unterhalb der ersten Grenzlinie, kann der Faden-Freischneider ausgeschlossen werden.

Insbesondere kann die Faden-Freischneidersteuerart ermöglichen, eine Drehzahlbegrenzung zum Betreiben mit einer begrenzten Drehzahl auszuführen. Somit können geringe Schallwerte und/oder eine hohe Laufzeit, insbesondere des elektrischen Energiespeichers, soweit vorhanden, erreicht werden.

Die Schneideblatt-Freischneidersteuerart kann ermöglichen, ein Betreiben mit einer hohen, insbesondere gegenüber der begrenzten Drehzahl höheren, Drehzahl freizugeben. Somit kann eine hohe Schnittperformance erreicht werden. Zusätzlich oder alternativ kann die Schneideblatt-Freischneidersteuerart ein kurzzeitiges Trudeln beim Gasspiel ermöglichen beziehungsweise freigeben oder erlauben. Somit kann ein, insbesondere von einer Antriebseinheit mit einem Verbrennungsmotor, gewohntes Verhalten erreicht werden. Weiter zusätzlich oder alternativ kann die Schneideblatt-Freischneidersteuerart eine Anpassung, insbesondere eine Erhöhung, von Beschleunigungsmomenten, insbesondere bei einem Hochlaufen, und/oder von Bremsmomenten, insbesondere bei einem Auslaufen, ermöglichen. Somit können gleiche Beschleunigungs- und/oder Bremszeiten für verschiedene Typen von Werkzeugeinheiten erreicht werden beziehungsweise Beschleunigungs- und/oder Bremszeiten eingehalten werden. Weiter zusätzlich oder alternativ kann die Schneideblatt-Freischneidersteuerart ermöglichen, eine Freigabe hoher Last- beziehungsweise Leistungsspitzen auszuführen beziehungsweise hohe Lastspitzen freizugeben. Somit kann eine hohe Schnittperformance und/oder eine schnelle Wiederbeschleunigung erreicht werden.

Kurz: die erste Freischneidersteuerart kann mindestens ein Merkmal aus der Menge bestehend aus Drehzahlfreigabe, Trudelfreigabe, Beschleunigungs- und/oder Bremsmomentanpassung und/oder Lastfreigabe aufweisen.

Somit kann das Kriterium Last, insbesondere Lastwert, zur Unterscheidung Faden-Freischneider oder erster Schneideblatt-Freischneider dienen.

Die Betriebsdaten für das Kriterium Last können zeitlich vor, zeitgleich mit und/oder zeitlich nach den Betriebsdaten für das Kriterium rotatorische oder nicht-rotatorische Werkzeugeinheit beziehungsweise periodische Schwingung, das Kriterium dynamische Schwankung, das Kriterium Änderung, das Kriterium Unterschwinger und/oder das Kriterium Massenträgheitsmoment, soweit vorhanden, erfasst werden. Insbesondere können die Betriebsdaten dieselben sein. Zusätzlich oder alternativ kann die Unterscheidung Faden-Freischneider oder erster Schneideblatt-Freischneider zeitlich vor, zeitgleich mit und/oder zeitlich nach der Unterscheidung rotatorische Werkzeugeinheit oder nicht-rotatorische Werkzeugeinheit, der Unterscheidung Säge oder Nicht-Säge, der Unterscheidung Nicht-Blasgerät oder, insbesondere möglicherweise, Blasgerät, der Unterscheidung Werkzeugeinheit mit einer flexiblen Werkzeugwelle oder ohne flexible Werkzeugwelle und/oder der Unterscheidung Faden-Freischneider oder erster Schneideblatt-Freischneider, zweiter Schneideblatt-Freischneider oder bodengeführte Werkzeugeinheit, soweit vorhanden, bestimmt werden. Anders formuliert: die Reihenfolge der Kriterien kann, braucht aber nicht der Reihenfolge der Ansprüche beziehungsweise ihrer Schritte zu entsprechen.

In einer Weiterbildung der Erfindung, falls beziehungsweise wenn in Schritt c) bestimmt wird, dass die gekoppelte Werkzeugeinheit eine rotatorische Werkzeugeinheit ist und dass die erfassten Betriebsdaten keine dynamische Schwankung und keine Änderung bei zeitlich konstanter Drehzahl aufweisen, wobei die Typen ein Blasgerät aufweisen, werden im Schritt b) Betriebsdaten in Form eines zeitlichen Drehzahlverlaufs, eines zeitlichen Stromverlaufs und eines zeitlichen Leistungsverlaufs der Antriebseinheit erfasst, insbesondere automatisch. Des Weiteren wird im Schritt c) ein Massenträgheitsmoment aus dem erfassten zeitlichen Drehzahlverlauf und dem erfassten zeitlichen Stromverlauf bestimmt, insbesondere automatisch. Außerdem wird im Schritt c) eine Last aus dem erfassten zeitlichen Leistungsverlauf über dem erfassten zeitlichen Drehzahlverlauf bestimmt, insbesondere automatisch. Weiter wird im Schritt c) bestimmt, insbesondere automatisch, dass die gekoppelte Werkzeugeinheit ein Blasgerät ist, wenn beziehungsweise falls das bestimmte Massenträgheitsmoment in einem, insbesondere dem, ersten Massenträgheitsmomentbereich liegt und wenn die bestimmte Last in einem dritten Lastbereich liegt. Zudem wird im Schritt d) die Antriebseinheit in einer Blasgerätsteuerart gesteuert, insbesondere automatisch, wenn beziehungsweise falls die gekoppelte Werkzeugeinheit als ein Blasgerät bestimmt ist.

Insbesondere kann der dritte Lastbereich von dem ersten Lastbereich und/oder dem zweiten Lastbereich, soweit vorhanden, verschieden sein. Typischerweise können der dritte Lastbereich und der erste Lastbereich sich um einen Faktor von 1,5 bis 4, insbesondere von 2 bis 3, insbesondere 2,5, unterscheiden. Insbesondere kann der dritte Lastbereich höher als der erste Lastbereich sein. Insbesondere kann der dritte Lastbereich ein Lastbereich über einem Drehzahlbereich sein, insbesondere ein Last- und Drehzahlflächenbereich. Der dritte Lastbereich und der erste Lastbereich können durch die zweite Grenzlinie voneinander getrennt sein.

Insbesondere kann das Blasgerät eine sehr hohe Grundlast aufweisen. Die Grundlast kann höher als eine Grundlast, und insbesondere als eine Lastkollektiv Dauer, des Faden-Freischneiders, soweit vorhanden, sein. In anderen Worten: liegt die bestimmte Last oberhalb der zweiten Grenzlinie, kann der Faden-Freischneider ausgeschlossen werden. Typischerweise kann das Blasgerät immer in Grundlast betrieben werden und somit dauerhaft bewertet beziehungsweise erkannt oder bestimmt werden.

Die Blasgerätsteuerart kann ermöglichen, eine Drehzahlbegrenzung zum Betreiben mit einer begrenzten Drehzahl auszuführen. Somit können geringe Schallwerte und/oder eine hohe Laufzeit, insbesondere des elektrischen Energiespeichers, soweit vorhanden, erreicht werden. Zusätzlich oder alternativ kann die Blasgerätsteuerart ermöglichen, ein Betreiben mit einer hohen, insbesondere gegenüber der begrenzten Drehzahl höheren, Drehzahl freizugeben, insbesondere kurzzeitig. Anders formuliert: die Blasgerätsteuerart kann ermöglichen, einen Boost, insbesondere mit hoher Leistung, freizugeben. Somit kann eine hohe Blasperformance erreicht werden. Weiter zusätzlich oder alternativ kann die Blasgerätsteuerart einen Sanftanlauf, insbesondere beim nächsten Hochlaufen, ermöglichen. Somit kann ein geringes Drehmoment, insbesondere im Handgelenk des Benutzers, und/oder ein komfortabler Anlauf erreicht werden. Weiter zusätzlich oder alternativ kann die Blasgerätsteuerart eine Anpassung, insbesondere eine Erhöhung, von Bremsmomenten, insbesondere bei einem Auslaufen, ermöglichen. Somit können gleiche Bremszeiten für verschiedene Typen von Werkzeugeinheiten erreicht werden beziehungsweise Bremszeiten eingehalten werden. Zusätzlich oder alternativ kann ein schneller Stromabbruch, insbesondere ein Luftstromabbruch, für eine präzise Reinigung erreicht werden.

Kurz: die Blasgerätsteuerart kann mindestens ein Merkmal aus der Menge bestehend aus Drehzahlbegrenzung, Drehzahlfreigabe, Boostfreigabe, Sanftanlauf und/oder Bremsmomentanpassung aufweisen.

Somit kann das Kriterium Massenträgheitsmoment und Last, insbesondere Massenträgheitsmomentwert und Lastwert, zur Unterscheidung Blasgerät oder Nicht-Blasgerät dienen.

Die Betriebsdaten für das Kriterium Massenträgheitsmoment und Last können zeitlich vor, zeitgleich mit und/oder zeitlich nach den Betriebsdaten für das Kriterium rotatorische oder nicht-rotatorische Werkzeugeinheit beziehungsweise periodische Schwingung, das Kriterium dynamische Schwankung, das Kriterium Änderung, das Kriterium Unterschwinger, das Kriterium Massenträgheitsmoment und/oder das Kriterium Last, soweit vorhanden, erfasst werden. Insbesondere können die Betriebsdaten dieselben sein. Zusätzlich oder alternativ kann die Unterscheidung Blasgerät oder Nicht-Blasgerät zeitlich vor, zeitgleich mit und/oder zeitlich nach der Unterscheidung rotatorische Werkzeugeinheit oder nicht-rotatorische Werkzeugeinheit, der Unterscheidung Säge oder Nicht-Säge, der Unterscheidung Nicht-Blasgerät oder, insbesondere möglicherweise, Blasgerät, der Unterscheidung Werkzeugeinheit mit einer flexiblen Werkzeugwelle oder ohne flexible Werkzeugwelle, der Unterscheidung Faden-Freischneider oder erster Schneideblatt-Freischneider, zweiter Schneideblatt-Freischneider oder bodengeführte Werkzeugeinheit und/oder der Unterscheidung Faden-Freischneider oder erster Schneideblatt-Freischneider, soweit vorhanden, bestimmt werden. Anders formuliert: die Reihenfolge der Kriterien kann, braucht aber nicht der Reihenfolge der Ansprüche beziehungsweise ihrer Schritte zu entsprechen.

Des Weiteren bezieht sich die Erfindung auf ein System, das insbesondere zum Ausführen des zuvor beschriebenen Verfahrens ausgebildet sein kann. Das erfindungsgemäße System weist eine elektrische Antriebseinheit, eine, insbesondere elektrische, Erfassungseinrichtung, eine, insbesondere elektrische, Bestimmungseinrichtung und eine, insbesondere elektrische, Steuerungseinrichtung auf. Die Antriebseinheit ist zum Koppeln und Antreiben einer Werkzeugeinheit ausgebildet Die Werkzeugeinheit ist aus einer Menge von verschiedenen Typen von Werkzeugeinheiten ausgewählt. Die Menge weist mindestens eine rotatorische Werkzeugeinheit und mindestens eine nicht-rotatorische Werkzeugeinheit auf. Die Erfassungseinrichtung ist zum Erfassen von Betriebsdaten der Antriebseinheit während des Antreibens ausgebildet. Die Bestimmungseinrichtung ist zum Bestimmen basierend auf den erfassten Betriebsdaten, ob die gekoppelte Werkzeugeinheit eine rotatorische Werkzeugeinheit oder eine nicht-rotatorische Werkzeugeinheit ist, ausgebildet. Die Steuerungseinrichtung ist zum Steuern der Antriebseinheit in einer Rotationssteuerart, wenn die gekoppelte Werkzeugeinheit als eine rotatorische Werkzeugeinheit bestimmt ist, oder einer Nicht-Rotationssteuerart, wenn die gekoppelte Werkzeugeinheit als eine nicht-rotatorische Werkzeugeinheit bestimmt ist, ausgebildet.

Das System kann die gleichen Vorteile ermöglichen wie das zuvor beschriebene Verfahren. Insbesondere kann die elektrische Antriebseinheit teilweise oder ganz ausgebildet sein, wie für das Verfahren zuvor beschrieben. Das System kann als Werkzeugsystem bezeichnet werden.

Insbesondere kann die Antriebseinheit die Erfassungseinrichtung, die Bestimmungseinrichtung und/oder die Steuerungseinrichtung aufweisen. Zusätzlich oder alternativ können die Antriebseinheit, die Erfassungseinrichtung, die Bestimmungseinrichtung und/oder die Steuerungseinrichtung miteinander zusammenwirken, insbesondere mindestens eine kabellose oder kabelgebundene Signalverbindung miteinander aufweisen.

Die Erfassungseinrichtung kann mindestens einen elektrischen Sensor zum Erfassen der Betriebsdaten aufweisen. Zusätzlich oder alternativ kann die Erfassungseinrichtung eine, insbesondere elektrische beziehungsweise elektronische und/oder magnetische Speichereinrichtung zum Speichern der erfassten Betriebsdaten aufweisen.

Die Bestimmungseinrichtung kann einen Prozessor, insbesondere eine CPU, zum Bestimmen der, insbesondere gekoppelten, Werkzeugeinheit aufweisen. Zusätzlich oder alternativ kann die Erfassungseinrichtung eine, insbesondere elektrische beziehungsweise elektronische und/oder magnetische Speichereinrichtung zum Speichern des Kriteriums/der Kriterien, insbesondere mindestens eines Kennfelds aufweisend das Kriterium/die Kriterien, aufweisen.

Die Steuerungseinrichtung kann einen Prozessor, insbesondere eine CPU, zum Steuern der Antriebseinheit aufweisen. Zusätzlich oder alternativ kann die Steuerungseinrichtung eine, insbesondere elektrische beziehungsweise elektronische und/oder magnetische Speichereinrichtung zum Speichern der typabhängigen Steuerarten aufweisen. Weiter zusätzlich oder alternativ kann die Steuerungseinrichtung eine Motorsteuerung beziehungsweise eine Motorelektronik, insbesondere einen Umrichter, aufweisen.

In einer Weiterbildung der Erfindung weist das System mindestens eine, insbesondere die, Werkzeugeinheit auf, die zum Koppen und Antrieben durch die Antriebseinheit ausgebildet ist. Insbesondere kann die Werkzeugeinheit teilweise oder ganz ausgebildet sein, wie für das Verfahren zuvor beschrieben.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: eine Perspektivansicht eines erfindungsgemäßen Systems aufweisend eine Antriebseinheit, eine Erfassungseinrichtung, eine Bestimmungseinrichtung und eine Steuerungseinrichtung
- Fig. 3: eine weitere Perspektivansicht des erfindungsgemäßen Systems aufweisend mindestens eine Werkzeugeinheit, insbesondere eine Menge von verschiedenen Typen von Werkzeugeinheiten, angeordnet in einem Diagramm aufweisend Unterscheidungskriterien,
- Fig. 4: einen zeitlichen Drehzahlverlauf aufweisend eine periodische Schwingung,
- Fig. 5: eine Perspektivansicht von zwei nicht-rotatorischen Werkzeugeinheiten jeweils bei einer Umkehr einer Bewegungsrichtung.
- Fig. 6: einen zeitlichen Leistungsverlauf aufweisend eine dynamische Schwankung,
- Fig. 7: einen Leistungsverlauf über einem Drehzahlverlauf aufweisend einen ersten Lastbereich, einen zweiten Lastbereich und einen dritten Lastbereich,
- Fig. 8: weitere zeitliche Drehzahlverläufe teilweise aufweisend mindestens einen Unterschwinger,
- Fig. 9: einen weiteren zeitlichen Drehzahlverlauf aufweisend mindestens einen Unterschwinger,
- Fig. 10: einzelne der Menge von verschiedenen Typen von Werkzeugeinheiten angeordnet in einem ersten Massenträgheitsmomentbereich, einem zweiten Massenträgheitsmomentbereich oder einem dritten Massenträgheitsmomentbereich, und
- Fig. 11: einen weiteren zeitlichen Drehzahlverlauf für eine Massenträgheitsmomentbestimmung.

### DETAILLIERTE BESCHREIBUNG DER AUSFÜHRUNGSBEISPIELE

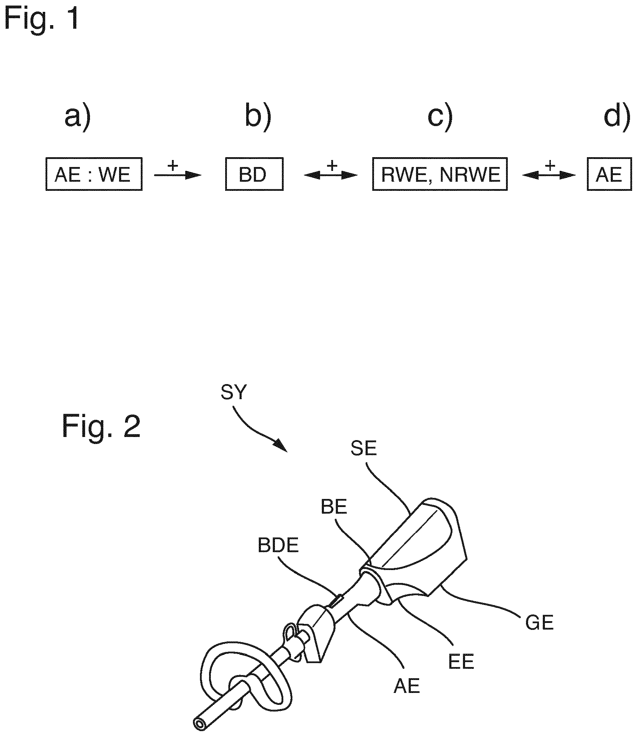

Fig. 2, 3, 5, 7, 8, 10 und 11 zeigen ein erfindungsgemäßes System SY. Das System SY weist eine elektrische Antriebseinheit AE, eine Erfassungseinrichtung EE, eine Bestimmungseinrichtung BE und eine Steuerungseinrichtung SE auf. Die Antriebseinheit AE ist zum Koppeln und Antreiben einer Werkzeugeinheit WE ausgebildet Die Werkzeugeinheit WE ist aus einer Menge von verschiedenen Typen von Werkzeugeinheiten WE ausgewählt. Die Menge weist mindestens eine rotatorische Werkzeugeinheit RWE und mindestens eine nicht-rotatorische Werkzeugeinheit NRWE auf. Die Erfassungseinrichtung EE ist zum Erfassen von Betriebsdaten BD der Antriebseinheit AE während des Antreibens ausgebildet. Die Bestimmungseinrichtung BE ist zum Bestimmen basierend auf den erfassten Betriebsdaten BD, ob die gekoppelte Werkzeugeinheit WE eine rotatorische Werkzeugeinheit RWE oder eine nicht-rotatorische Werkzeugeinheit NRWE ist, ausgebildet. Die Steuerungseinrichtung SE ist zum Steuern der Antriebseinheit AE in einer Rotationssteuerart, wenn die gekoppelte Werkzeugeinheit WE als eine rotatorische Werkzeugeinheit RWE bestimmt ist, oder einer Nicht-Rotationssteuerart, wenn die gekoppelte Werkzeugeinheit WE als eine nicht-rotatorische Werkzeugeinheit NRWE bestimmt ist, ausgebildet.

Im gezeigten Ausführungsbeispiel weist die Antriebseinheit AE die Erfassungseinrichtung EE, die Bestimmungseinrichtung BE und die Steuerungseinrichtung SE auf. In anderen Worten: das System SY weist ein Gehäuse GE auf, in dem die Antriebseinheit AE, die Erfassungseinrichtung EE, die Bestimmungseinrichtung BE und die Steuerungseinrichtung SE angeordnet sind. In alternativen Ausführungsbeispielen können die Antriebseinheit, die Erfassungseinrichtung, die Bestimmungseinrichtung und/oder die Steuerungseinrichtung getrennt voneinander ausgebildet sein.

Im Detail weist das System SY die mindestens eine Werkzeugeinheit WE auf, die zum Koppen und Antrieben durch die Antriebseinheit AE ausgebildet ist. Im gezeigten Ausführungsbeispiel weist das System SY die Menge von verschiedenen Typen von Werkzeugeinheiten WE auf.

Des Weiteren weist Antriebseinheit AE einen Elektromotor zum Antreiben der, insbesondere gekoppelten, Werkzeugeinheit WE auf.

Zusätzlich weist die Antriebseinheit AE einen elektrischen Energiespeicher zum Versorgen der Antriebseinheit AE beziehungsweise ihres Elektromotors mit elektrischer Energie auf.

Außerdem weist die Antriebseinheit AE mindestens ein benutzerbetätigbares Bedienelement BDE zum Auslösen des Antreibens beziehungsweise des Steuerns auf.

Im Detail ist die Antriebseinheit AE drehzahlgeregelt beziehungsweise weist einen Regler auf. Durch den Benutzer beziehungsweise das Bedienelement BDE, insbesondere über ein Potentiometer beziehungsweise eine Potentiometer-Spannung, kann eine Soll-Drehzahl der Antriebseinheit AE beziehungsweise ihres Elektromotors oder der Werkzeugeinheit WE vorgegeben beziehungsweise berechnet werden, insbesondere mittels der Antriebseinheit AE und/oder der Steuerungseinrichtung SE.

Im gezeigten Ausführungsbeispiel sind die Betriebsdaten Eingangsgrößen, insbesondere Größen des Elektromotors. Im Detail ist dies Drehzahl, insbesondere in der Einheit rpm (Englisch: revolutions per minute; Deutsch: Umdrehungen pro Minute) und/oder mit einer Auflösung von 1 rpm. Soll-Drehzahl, insbesondere mit einer Auflösung von 1 rpm. Strom, insbesondere absoluter Wert des aktuellen Phasenstroms bei einer Blockkommutierung oder momentbildender Strom Iq und/oder mit einer Auflösung von 100 Milliampere. Spannung, insbesondere aktuell mittlere Phasenspannung und/oder mit einer Auflösung von 1 Millivolt.

Aus dem Strom, insbesondere dem Phasenstrom, und der Spannung, insbesondere der Phasenspannung, kann, insbesondere durch Multiplikation, eine Leistung bestimmt beziehungsweise berechnet werden, insbesondere in der Einheit Watt (W).

Fig. 1 zeigt ein erfindungsgemäßes Verfahren zum typabhängigen Betreiben der elektrischen Antriebseinheit AE, insbesondere mittels des zuvor beschriebenen Systems SY. Die Antriebseinheit AE ist zum Koppeln und Antreiben der Werkzeugeinheit WE ausgebildet. Die Werkzeugeinheit WE ist aus der Menge von verschiedenen Typen von Werkzeugeinheiten WE ausgewählt. Die Menge weist die mindestens eine rotatorische Werkzeugeinheit RWE und die mindestens eine nicht-rotatorische Werkzeugeinheit NRWE auf. Das Verfahren weist die Schritte auf: a) Antreiben der gekoppelten Werkzeugeinheit WE durch die Antriebseinheit AE. b) Erfassen von Betriebsdaten BD der Antriebseinheit AE während des Antreibens, insbesondere mittels der Erfassungseinrichtung EE. c) Bestimmen basierend auf den erfassten Betriebsdaten BD, ob die gekoppelte Werkzeugeinheit WE eine rotatorische Werkzeugeinheit RWE oder eine nicht-rotatorische Werkzeugeinheit ist, insbesondere mittels der Bestimmungseinrichtung BE. d) Steuern der Antriebseinheit in einer, insbesondere der, Rotationssteuerart, wenn die gekoppelte Werkzeugeinheit WE als eine rotatorische Werkzeugeinheit RWE bestimmt ist, oder einer, insbesondere der, Nicht-Rotationssteuerart, wenn die gekoppelte Werkzeugeinheit WE als eine nicht-rotatorische Werkzeugeinheit NRWE bestimmt ist, insbesondere mittels der Steuerungseinrichtung SE.

Im Detail weist der Schritt b) auf: Erfassen von Betriebsdaten BD in Form eines zeitlichen Drehzahl-, Strom-, Spannungs- und/oder Leistungsverlaufs nA der Antriebseinheit AE, insbesondere bei im Wesentlichen konstanter Drehzahl nA'. Des Weiteren weist der Schritt c) auf: Bestimmen, dass die gekoppelte Werkzeugeinheit WE eine rotatorische Werkzeugeinheit RWE ist, wenn der erfasste zeitliche Drehzahl-, Strom-, Spannungs- und/oder Leistungsverlauf nA frei von einer periodischen Schwingung PDS ist, oder eine nicht-rotatorische Werkzeugeinheit NRWE ist, wenn der erfasste zeitliche Drehzahl-, Strom-, Spannungs-und/oder Leistungsverlauf nA eine periodische Schwingung PDS aufweist.

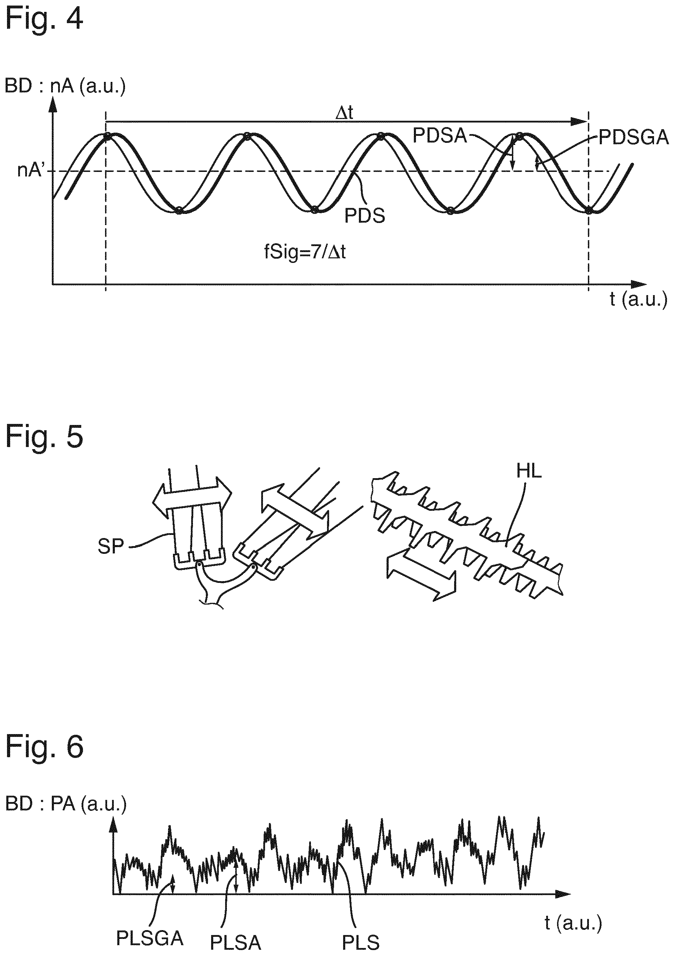

In Fig. 4 weist der zeitliche Drehzahlverlauf nA die periodische Schwingung PDS auf, insbesondere mit einer Minimalamplitude PDSA größer als eine Grenzamplitude PDSGA.

Im Detail ist die mindestens eine nicht-rotatorische Werkzeugeinheit NRWE zur Umkehr einer Bewegungsrichtung, insbesondere ihres Werkzeugs, ausgebildet, wie in Fig. 5 durch Pfeile gezeigt. Diese Umkehr verursacht die periodische Schwingung PDS.

Somit kann das Kriterium periodische Schwingung PDS zur Unterscheidung rotatorische Werkzeugeinheit RWE oder nicht-rotatorische Werkzeugeinheit NRWE dienen.

Falls in Schritt c) bestimmt wird, dass die gekoppelte Werkzeugeinheit WE eine nicht-rotatorische Werkzeugeinheit NRWE ist, wobei die Typen eine erste Werkzeugeinheit HL mit einer ersten Übersetzung i1 und eine zweite Werkzeugeinheit SP mit einer zweiten, von der ersten verschiedenen Übersetzung i2 aufweisen, werden im Schritt b) Betriebsdaten BD in Form des zeitlichen Drehzahl-, Strom-, Spannungs- und/oder Leistungsverlaufs nA der Antriebseinheit AE erfasst beziehungsweise die Betriebsdaten BD sind zeitlich vorher erfasst worden. In Fig. 4 sind die Betriebsdaten BD dieselben. Des Weiteren werden im Schritt c) eine Frequenz fSig der periodischen Schwingung PDS und die, insbesondere im Wesentlichen konstante beziehungsweise mittlere, Drehzahl nA' aus dem erfassten zeitlichen Drehzahlverlauf nA bestimmt. Außerdem wird im Schritt c) eine Übersetzung i aus der bestimmten Frequenz fSig und der bestimmten Drehzahl nA' bestimmt. Weiter wird im Schritt c) bestimmt, dass die gekoppelte Werkzeugeinheit, eine erste Werkzeugeinheit HL ist, wenn die bestimmte Übersetzung i in einem ersten Übersetzungsbereich i1 liegt, oder eine zweite Werkzeugeinheit SP ist, wenn die bestimmte Übersetzung i in einem zweiten, von dem ersten verschiedenen Übersetzungsbereich i2 liegt. Zudem wird im Schritt d) die Antriebseinheit AE in einer ersten Werkzeugsteuerart, wenn die gekoppelte Werkzeugeinheit WE als eine erste Werkzeugeinheit HL bestimmt ist, oder einer zweiten Werkzeugsteuerart gesteuert, wenn die gekoppelte Werkzeugeinheit WE als eine zweite Werkzeugeinheit SP bestimmt ist.

Im Detail steht die Frequenz fSig der Werkzeugbewegung mit der periodischen Schwingung PDS auf der Drehzahl nA' in folgendem Zusammenhang: fSig = nA' / i /60 * 2. Stellt man diese Gleichung um, kann man aus der Frequenz fSig und der Drehzahl nA' die Übersetzung i berechnen, was insbesondere einen eindeutigen Rückschluss auf die gekoppelte Werkzeugeinheit zulässt.

Im gezeigten Ausführungsbeispiel der Fig. 4 werden die Betriebsdaten BD leicht gefiltert um den gewünschten Verlauf der Drehzahl der gesuchten Frequenzen sichtbarer zu machen. Insbesondere kann ein einfacher PT1 Filter verwendet werden. Die gefilterten Betriebsdaten werden entlang der Zeitachse t verschoben, wie 3 Millisekunden. Es wird eine Differenz zwischen den gefilterten und den gefilterten und verschobenen Betriebsdaten gebildet. Es werden Nulldurchgänge der Differenz bestimmt, wobei ein Nulldurchgang einer Kreuzung der gefilterten und den gefilterten und verschobenen Betriebsdaten entspricht, wie in Fig. 4 durch Kreise gezeigt. Es wird eine Mehrzahl von Schnittpunkten über eine bestimmte Zeitdauer oder eine Zeitdauer für eine bestimmte Mehrzahl von Schnittpunkten bestimmt. Die Frequenz fSig wird aus der Mehrzahl von Schnittpunkten und dem zeitlichen Delta berechnet. Die Frequenz fSig wird ständig wiederholend bestimmt zur Kontrolle einer gleichbleibenden Frequenz. Erst wenn die Frequenz fSig konstant und gleichbleibend bei konstanter Drehzahl nA' ist, gilt die Frequenz fSig als bestimmt beziehungsweise erkannt. Vorliegend wird nach 7 Schnittpunkten aus dem zeitlichen Delta die Frequenz fSig bestimmt.

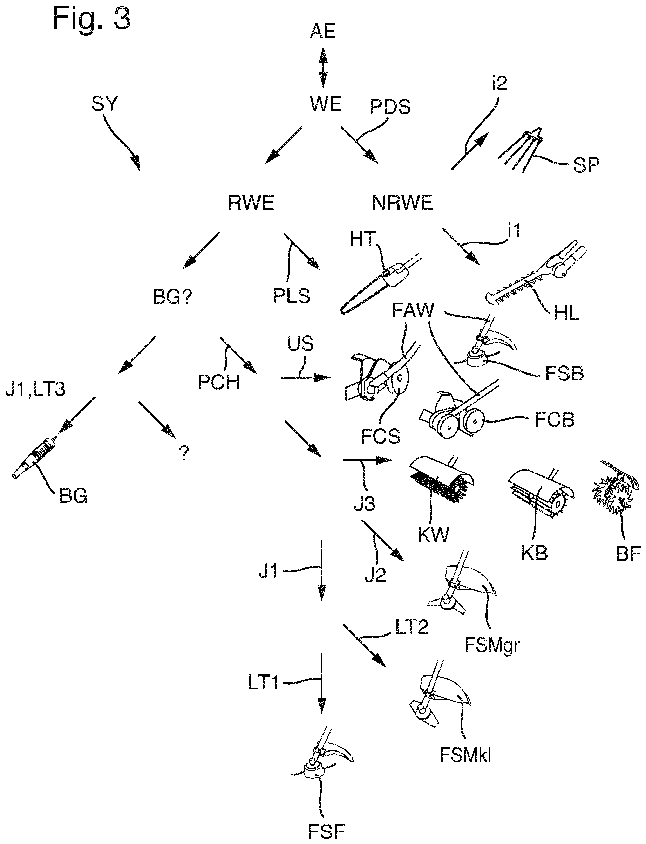

Im gezeigten Ausführungsbeispiel der Fig. 3 und 5 ist die erste Werkzeugeinheit HL eine Heckenschere und die erste Werkzeugsteuerart ist eine Heckenscherensteuerart. Die zweite Werkzeugeinheit SP ist ein Spezialernter und die zweite Werkzeugsteuerart ist eine Spezialerntersteuerart.

Die Frequenz fSig der Heckenschere HL ist etwa 63 Hertz (Hz) bei der Drehzahl nA' von 10000 rpm der Antriebseinheit AE beziehungsweise ihres Elektromotors. Die Frequenz fSig des Spezialernters ist etwa 32 Hz bei der Drehzahl nA' von 10000 rpm.

Somit kann das Kriterium Übersetzung i zur Unterscheidung erste Werkzeugeinheit HL, insbesondere Heckenschere, oder zweite Werkzeugeinheit SP, insbesondere Spezialernter, dienen.

Falls in Schritt c) bestimmt wird, dass die gekoppelte Werkzeugeinheit WE eine rotatorische Werkzeugeinheit RWE ist, wobei die Typen eine Säge HT, insbesondere einen Hochentaster, aufweisen, werden im Schritt b) Betriebsdaten BD in Form eines zeitlichen Drehzahl-, Strom-, Spannungs- und/oder Leistungsverlaufs PA der Antriebseinheit AE erfasst, insbesondere bei im Wesentlichen konstanter Drehzahl nA'. Des Weiteren wird im Schritt c) bestimmt, dass die gekoppelte Werkzeugeinheit WE eine Säge HT ist, wenn der erfasste zeitliche Drehzahl-, Strom-, Spannungs- und/oder Leistungsverlauf PA eine dynamische Schwankung PLS aufweist. Außerdem wird im Schritt d) die Antriebseinheit AE in einer Sägesteuerart gesteuert, wenn die gekoppelte Werkzeugeinheit WE als eine Säge HT bestimmt ist.

In Fig. 6 weist der zeitliche Leistungsverlauf PA die dynamische Schwankung PLS auf, insbesondere mit einer Minimalamplitude PLSA größer als eine Grenzamplitude PLSGA und mit einer Frequenz aus einem bestimmten Frequenzbereich.

Im Detail stellen sich bei der Leistung PA Schwankungen mit sehr hoher Amplitude PLSA und eine ungefähren Frequenz von 75 bis 90 Hz, im Mittel von 80 Hz, bei der Drehzahl nA' von 10000 rpm der Antriebseinheit AE beziehungsweise ihres Elektromotors ein.

Sowohl die ungefähre Frequenz, als auch die Höhe der Amplitude PLSA der dynamischen Schwankung PLS sind verschieden von der Amplitude PDSA und der Frequenz fSig der periodischen Schwingung PDS. Insbesondere ist die dynamische Schwankung PLS nicht rein periodisch.

Im gezeigten Ausführungsbeispiel werden die Betriebsdaten BD einmal leicht und einmal stärker gefiltert. Anschließend wird eine Differenz gebildet. Dadurch stellt sich eine extrem einfache Bandpassfilterung (Frequenzfaktor) ein. Übersteigt die Amplitude der gefilterten Betriebsdaten eine bestimmte Schwelle, wird ein Zähler (zeitlicher Faktor) hochgezählt. Erreicht der Zähler eine bestimmte Schwelle, gilt die Säge HT als erkannt.

Somit kann das Kriterium dynamische Schwankung PLS zur Unterscheidung Säge HT oder Nicht-Säge dienen.

Falls in Schritt c) bestimmt wird, dass die gekoppelte Werkzeugeinheit WE eine rotatorische Werkzeugeinheit RWE ist und dass die erfassten Betriebsdaten BD keine dynamische Schwankung PLS aufweisen, wobei die Typen ein Blasgerät BG aufweisen, werden im Schritt b) Betriebsdaten BD in Form eines, insbesondere des, zeitlichen Drehzahlverlaufs nA und eines, insbesondere des, zeitlichen Strom-, Spannungs- und/oder Leistungsverlaufs PA der Antriebseinheit AE erfasst beziehungsweise die Betriebsdaten BD sind zeitlich vorher erfasst worden, insbesondere bei konstanter Drehzahl nA. Des Weiteren wird im Schritt c) bestimmt, dass die gekoppelte Werkzeugeinheit WE kein Blasgerät BG ist, wenn der erfasste zeitliche Strom-, Spannungs- und/oder Leistungsverlauf PA eine Änderung PCH, insbesondere größer als eine Grenzänderung PCHG und über eine Minimalzeitdauer, bei zeitlich konstanter Drehzahl nA aufweist. Außerdem wird im Schritt d) die Antriebseinheit AE in einer Nicht-Blasgerätsteuerart gesteuert, wenn die gekoppelte Werkzeugeinheit WE als kein Blasgerät BG bestimmt ist.

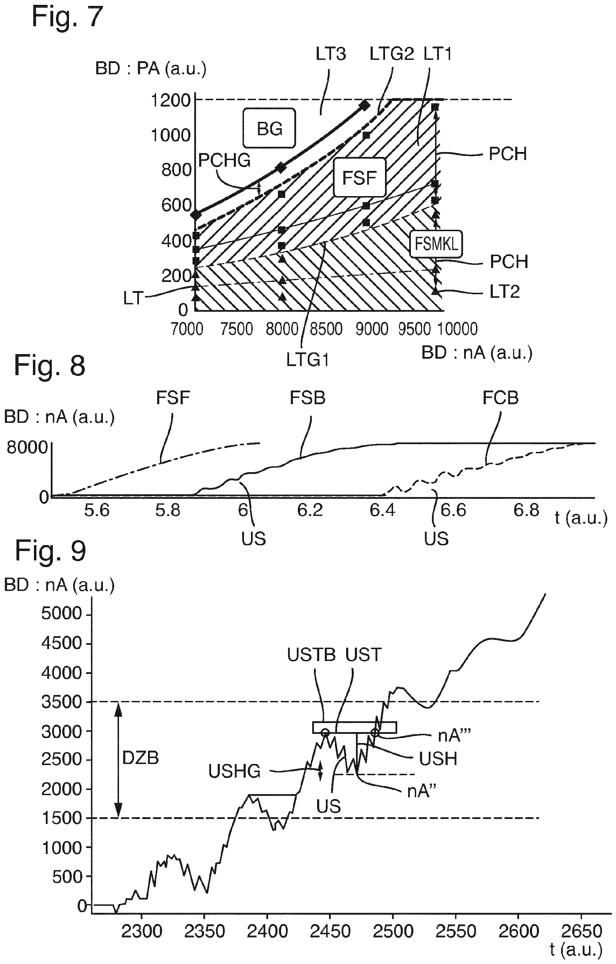

Typischerweise erfährt das Blasgerät BG in der normalen Anwendung keine äußere Last, wie in Fig. 7 gezeigt. Folglich kann bei einer Änderung PCH, insbesondere bei konstanter Drehzahl nA, das Blasgerät BG als gekoppelte Werkzeugeinheit WE ausgeschlossen werden.

Somit kann das Kriterium Änderung PCH zur Unterscheidung Nicht-Blasgerät oder, insbesondere möglicherweise, Blasgerät BG dienen.

Falls in Schritt c) bestimmt wird, dass die gekoppelte Werkzeugeinheit WE eine rotatorische Werkzeugeinheit RWE ist und dass die erfassten Betriebsdaten BD keine dynamische Schwankung und eine Änderung PCH bei zeitlich konstanter Drehzahl nA aufweisen, wobei die Typen eine Werkzeugeinheit FCS, FCB, FSB mit einer flexiblen Werkzeugwelle FAW aufweisen, werden im Schritt b) Betriebsdaten BD in Form eines, insbesondere des, zeitlichen Drehzahlverlaufs nA der Antriebseinheit AE erfasst, insbesondere bei einem Hochlaufen der Drehzahl nA. Des Weiteren wird im Schritt c) bestimmt, dass die gekoppelte Werkzeugeinheit WE eine Werkzeugeinheit FCS, FCB, FSB mit einer flexiblen Werkzeugwelle FAW ist, wenn der erfasste zeitliche Drehzahlverlauf nA in einem bestimmten Drehzahlbereich DZB mindestens einen Unterschwinger US aufweist. Außerdem wird im Schritt d) die Antriebseinheit AE in einer Flexwellensteuerart gesteuert, wenn die gekoppelte Werkzeugeinheit WE als eine Werkzeugeinheit FCS, FCB, FSB mit einer flexiblen Werkzeugwelle FAW bestimmt ist.

Insbesondere ist die Werkzeugeinheit WE mit der flexiblen Werkzeugwelle FAW eine Sense mit gebogenem Schaft FCS, ein Kantenschneider mit gebogenem Schaft FCB oder ein Freischneider mit gebogenem Schaft FSB, und insbesondere ohne Getriebe.

In Fig. 8 weisen der mittlere und der rechte und in Fig. 9 weist der zeitliche Drehzahlverlauf nA im Drehzahlbereich DZB, insbesondere von 1000 rpm bis 3500 rpm, mindestens einen Unterschwinger US auf, insbesondere mit einer Minimalhöhe USH größer als eine Grenzhöhe USHG und einer Zeitdauer UST in einem vorgegebenen Zeitdauerbereich USTB.

Im gezeigten Ausführungsbeispiel wird die die Höhe USH des maximalen Unterschwingers US bewertet. Der Unterschwinger US wird aus der Differenz des Maximalverlaufs der Drehzahl nA'" (kann nur ansteigen) und der tatsächlichen Drehzahl nA" berechnet. In Abhängigkeit der Höhe USH wird eine Entscheidung zur Differenzierung eines Faden-Freischneiders FSF getroffen.

Somit kann das Kriterium Unterschwinger US zur Unterscheidung Werkzeugeinheit FCS, FCB, FSB mit einer flexiblen Werkzeugwelle FAW oder ohne flexible Werkzeugwelle dienen.

Falls in Schritt c) bestimmt wird, dass die gekoppelte Werkzeugeinheit WE eine rotatorische Werkzeugeinheit RWE ist und dass die erfassten Betriebsdaten BD keine dynamische Schwankung, eine Änderung PCH bei zeitlich konstanter Drehzahl nA und in einem bestimmten Drehzahlbereich DZB keinen Unterschwinger aufweisen, wobei die Typen einen Faden-Freischneider FSF oder einen ersten Schneideblatt-Freischneider FSMkl, einen zweiten Schneideblatt-Freischneider FSMgr oder eine bodengeführte Werkzeugeinheit KW, KB, BF aufweisen, werden im Schritt b) Betriebsdaten in Form eines, insbesondere des, zeitlichen Drehzahlverlaufs nA und eines, insbesondere des, zeitlichen Stromverlaufs IA der Antriebseinheit AE erfasst beziehungsweise die Betriebsdaten BD sind zeitlich vorher erfasst worden, insbesondere bei einem Hochlaufen der Drehzahl nA. Des Weiteren wird im Schritt c) ein Massenträgheitsmoment J aus dem erfassten zeitlichen Drehzahlverlauf nA und dem erfassten zeitlichen Stromverlauf IA bestimmt. Außerdem wird im Schritt c) bestimmt, dass die gekoppelte Werkzeugeinheit WE ein Faden-Freischneider FSF oder ein erster Schneideblatt-Freischneider FSMkl ist, wenn das bestimmte Massenträgheitsmoment J in einem ersten Massenträgheitsmomentbereich J1 liegt, oder ein zweiter Schneideblatt-Freischneider FSMgr ist, wenn das bestimmte Massenträgheitsmoment J in einem zweiten, von dem ersten verschiedenen Massenträgheitsmomentbereich J2 liegt, oder eine bodengeführte Werkzeugeinheit KW, KB, BF ist, wenn das bestimmte Massenträgheitsmoment J in einem dritten, von dem ersten und zweiten verschiedenen Massenträgheitsmomentbereich J3 liegt. Weiter wird im Schritt d) die Antriebseinheit AE in einer ersten Freischneidersteuerart, wenn die gekoppelte Werkzeugeinheit WE als ein Faden-Freischneider FSF oder ein erster Schneideblatt-Freischneider FSMkl bestimmt ist, oder einer zweiten Freischneidersteuerart, wenn die gekoppelte Werkzeugeinheit WE als ein zweiter Schneideblatt-Freischneider FSMgr bestimmt ist, oder einer Bodensteuerart gesteuert, wenn die gekoppelte Werkzeugeinheit WE als eine bodengeführte Werkzeugeinheit KW, KB, KF bestimmt ist.

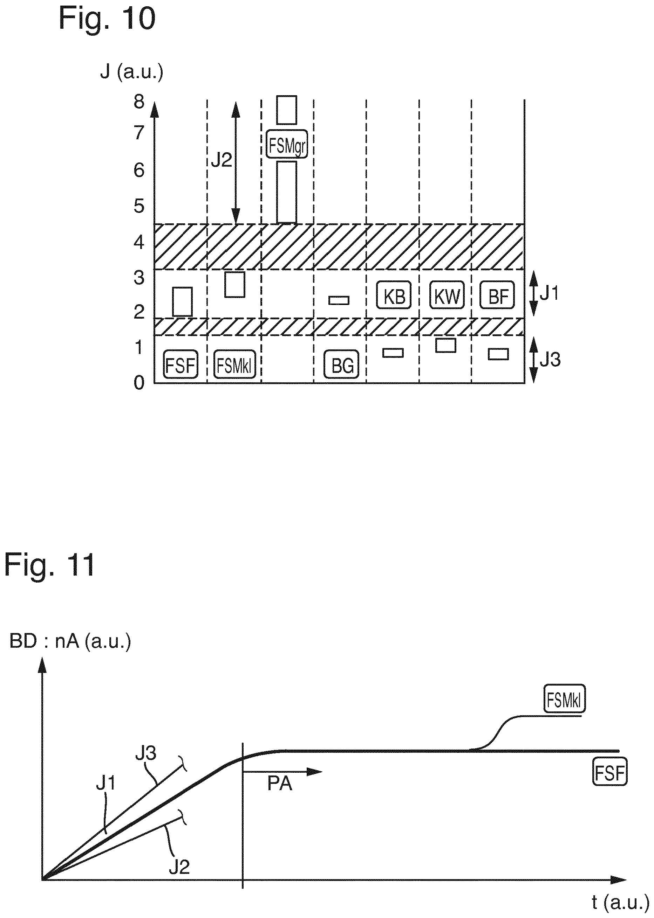

Insbesondere ist der erste Massenträgheitsmomentbereich J1 niedriger als der zweite Massenträgheitsmomentbereich J2, wie in Fig. 10 gezeigt. Des Weiteren ist der erste Massenträgheitsmomentbereich J1 höher als der dritte Massenträgheitsmomentbereich J3.

Die bodengeführte Werkzeugeinheit ist eine Kehrwalze KW, eine Kehrbürste KB oder eine Bodenfräße BF.

Im Detail gibt das Massenträgheitsmoment J (Inertialmoment) den Widerstand eines starren Körpers gegenüber einer Beschleunigung α um die eigene Achse an. Das Massenträgheitsmoment J steht mit einem Drehmoment M und der daraus resultierenden Beschleunigung α in folgendem Zusammenhang: J = M / a. Nach dieser Gleichung kann das Massenträgheitsmoment J aus dem Drehmoment M und der daraus resultierenden Beschleunigung α berechnet werden.

Im gezeigten Ausführungsbeispiel der Fig. 11 wird die Berechnung des Massenträgheitsmoments J der, insbesondere gekoppelten, Werkzeugeinheit WE etwas vereinfacht. Die Beschleunigung α und das Drehmoment beziehungsweise das Antriebseinheitsmoment M werden über mehrere Rechenschritte gemittelt (Mittelung zwischen zwei Drehzahlgrenzen). Es braucht beziehungsweise wird nicht mit dem tatsächlichen Antriebseinheitsmoment, sondern nur mit dem momentbildenden Strom Iq gerechnet. Daraus wird ein relatives Maß des Massenträgheitsmoments J und kein absoluter Wert erhalten. Eine Übersetzung i, soweit vorhanden wird nicht mit einberechnet, es wird nur gewertet, welcher Widerstand auf die Antriebseinheit AE bei der Beschleunigung wirkt.

Da ein Strom Id während der Beschleunigung bei niederen Drehzahlen ungefähr bei 0 liegt und kein absoluter Wert des Antriebseinheitsmoments M erforderlich ist, genügt folgende Vereinfachung: M ∼ Iq. Dies führt zu Iq = J * dω / dt. Ein Drehzahlschritt dω ist konstant und kann insbesondere über einen Parameter eingestellt werden. Der Unterschied in den Massenträgheitsmomentmaßen J kommt durch die Höhe des jeweiligen Stroms Iq und einer Mehrzahl aufaddierter Stromwerte (Mehrzahl = Dauer in Millisekunden für einen Drehzahlschritt dω) zustande.

Wie in Fig. 11 gezeigt, wird das Massenträgheitsmoment J der, insbesondere gekoppelten, Werkzeugeinheit WE während eines Beschleunigungsvorgangs erfasst beziehungsweise bestimmt. Dabei wird über mehrere Drehzahlschritte der aktuelle Strom Iq (proportional zum Antriebseinheitsmoment) in zeitdiskreten Schritten aufsummiert. Am Ende jedes Drehzahlschrittes dω wird die Summe der Ströme durch den Drehzahlschritt dividiert. Dadurch wird aus jedem Drehzahlschritt dω ein Maß für das Massenträgheitsmoment J erhalten. Nach Erreichen der Enddrehzahl der Berechnungen des Massenträgheitsmoments J wird aus den einzelnen berechneten Massenträgheitsmomentmaßen ein Mittelwert gebildet.

Im gezeigten Ausführungsbeispiel ist ein Grenzwert, insbesondere für das Massenträgheitsmomentmaß, zwischen dem ersten Massenträgheitsmomentbereich J1 und dem zweiten Massenträgheitsmomentbereich J2 4, insbesondere ist der erste Massenträgheitsmomentbereich J1 niedriger als der Grenzwert 4. Des Weiteren ist ein Grenzwert, insbesondere für das Massenträgheitsmomentmaß, zwischen dem ersten Massenträgheitsmomentbereich J1 und dem dritten Massenträgheitsmomentbereich J3 1,5, insbesondere ist der dritte Massenträgheitsmomentbereich J3 niedriger als der Grenzwert 1,5.

Somit kann das Kriterium Massenträgheitsmoment J zur Unterscheidung Faden-Freischneider FSF oder erster Schneideblatt-Freischneider FSMkl, zweiter Schneideblatt-Freischneider FSMgr oder bodengeführte Werkzeugeinheit KW, KB, KF dienen.

Falls in Schritt c) bestimmt wird, dass die gekoppelte Werkzeugeinheit WE ein Faden-Freischneider FSF oder ein erster Schneideblatt-Freischneider FSMkl ist, werden im Schritt b) Betriebsdaten BD in Form eines, insbesondere des, zeitlichen Leistungsverlaufs PA der Antriebseinheit AE erfasst beziehungsweise die Betriebsdaten BD sind zeitlich vorher erfasst worden, insbesondere bei konstanter Drehzahl nA. Des Weiteren wird im Schritt c) eine Last LT aus dem erfassten zeitlichen Leistungsverlauf PA über dem erfassten zeitlichen Drehzahlverlauf nA bestimmt. Außerdem wird im Schritt c) bestimmt, dass die gekoppelte Werkzeugeinheit WE ein Faden-Freischneider FSF ist, wenn die bestimmte Last LT in einem ersten Lastbereich LT1 liegt, oder ein erster Schneideblatt-Freischneider FSMkl ist, wenn die bestimmte Last LT in einem zweiten, von dem ersten verschiedenen Lastbereich LT2 liegt. Weiter wird im Schritt d) die Antriebseinheit AE in einer Faden-Freischneidersteuerart, wenn die gekoppelte Werkzeugeinheit WE als ein Faden-Freischneider FSF bestimmt ist, oder einer Schneideblatt-Freischneidersteuerart gesteuert, wenn die gekoppelte Werkzeugeinheit WE als ein erster Schneideblatt-Freischneider FSMkl bestimmt ist.

Insbesondere ist der erste Lastbereich LT1 höher als der zweite Lastbereich LT2, wie in Fig. 7 gezeigt. Im Detail sind der erste Lastbereich LT1 und der zweite Lastbereich LT2 durch eine erste Grenzlinie LTG1, in Fig. 7 gestrichelte Linie, voneinander getrennt.

Im gezeigten Ausführungsbeispiel ist eine, insbesondere dünne und durchgezogene, Grundlastlinie des Faden-Freischneiders FSF durch folgende Wertepaare gestützt beziehungsweise gekennzeichnet (Leistung PA über Drehzahl nA): 236 W über 7500 rpm, 245 W über 7700 rpm, 290 W über 8300 rpm, 335 W über 8800 rpm, 390 W über 9300 rpm, 485 W über 9600rpm.

Die Faden-Freischneidersteuerart ermöglicht, eine Drehzahlbegrenzung zum Betreiben mit einer begrenzten Drehzahl wie 7700 rpm auszuführen, wie in Fig. 11 gezeigt. Die Schneideblatt-Freischneidersteuerart ermöglicht, aber auch die anderen typabhängigen Steuerarten bis auf die Faden-Freischneidersteuerart können ermöglichen, ein Betreiben mit einer hohen, insbesondere gegenüber der begrenzten Drehzahl höheren, Drehzahl wie 10000 rpm freizugeben.

Somit kann das Kriterium Last LT zur Unterscheidung Faden-Freischneider FSF oder erster Schneideblatt-Freischneider FSMkl dienen.

Falls in Schritt c) bestimmt wird, dass die gekoppelte Werkzeugeinheit WE eine rotatorische Werkzeugeinheit RWE ist und dass die erfassten Betriebsdaten BD keine dynamische Schwankung und keine Änderung bei zeitlich konstanter Drehzahl nA aufweisen, wobei die Typen ein, insbesondere das, Blasgerät BG aufweisen, werden im Schritt b) Betriebsdaten BD in Form eines, insbesondere des, zeitlichen Drehzahlverlaufs nA, eines, insbesondere des, zeitlichen Stromverlaufs IA und eines, insbesondere des, zeitlichen Leistungsverlaufs PA der Antriebseinheit AE erfasst beziehungsweise die Betriebsdaten BD sind zeitlich vorher erfasst worden, insbesondere der Stromverlauf IA bei einem Hochlaufen der Drehzahl nA und der Leistungsverlauf PA bei konstanter Drehzahl nA. Des Weiteren wird im Schritt c) ein, insbesondere das, Massenträgheitsmoment J aus dem erfassten zeitlichen Drehzahlverlauf nA und dem erfassten zeitlichen Stromverlauf IA bestimmt. Außerdem wird im Schritt c) eine, insbesondere die, Last LT aus dem erfassten zeitlichen Leistungsverlauf PA über dem erfassten zeitlichen Drehzahlverlauf nA bestimmt. Weiter wird im Schritt c) bestimmt, dass die gekoppelte Werkzeugeinheit WE ein Blasgerät BG ist, wenn das bestimmte Massenträgheitsmoment J in einem, insbesondere dem, ersten Massenträgheitsmomentbereich J1 liegt und wenn die bestimmte Last LT in einem dritten Lastbereich LT3 liegt. Zudem wird im Schritt d) die Antriebseinheit in einer Blasgerätsteuerart gesteuert, wenn die gekoppelte Werkzeugeinheit WE als ein Blasgerät BG bestimmt ist.

Insbesondere ist der dritte Lastbereich LT3 höher als der erste Lastbereich LT1, wie in Fig. 7 gezeigt. Im Detail sind der dritte Lastbereich LT3 und der erste Lastbereich LT1 durch eine zweite Grenzlinie LTG2, in Fig. 7 gestrichelte Linie, voneinander getrennt.

Im gezeigten Ausführungsbeispiel ist eine, insbesondere dicke und durchgezogene, Grundlastlinie des Blasgeräts BG durch folgende Wertepaare gestützt beziehungsweise gekennzeichnet (Leistung PA über Drehzahl nA): 110 W über 3500 rpm, 175 W über 4400 rpm, 210 W über 4700 rpm, 235 W über 5050 rpm, 325 W über 5600 rpm, 410 W über 6100 rpm, 520 W über 6650 rpm, 620 W über 7200 rpm, 750 W über 7600 rpm, 950 W über 8200 rpm, 1200 W über 8900rpm.

Im gezeigten Ausführungsbeispiel der Fig. 11 wird das Massenträgheitsmoment J zeitlich vor der Last LT bestimmt.

Somit kann das Kriterium Massenträgheitsmoment J und Last LT zur Unterscheidung Blasgerät BG oder Nicht-Blasgerät dienen.

Wie die gezeigten und oben erläuterten Ausführungsbeispiele deutlich machen, stellt die Erfindung ein vorteilhaftes Verfahren zum Betreiben einer elektrischen Antriebseinheit bereit, das verbesserte Eigenschaften aufweist, insbesondere mehr Funktionalitäten, sowie ein System. Insbesondere ermöglichen das Verfahren und das System beziehungsweise die typabhängige Steuerart der Antriebseinheit, die gekoppelte Werkzeugeinheit optimal zu betreiben und/oder mindestens ein typspezifisches Problem beziehungsweise mindestens einen typspezifischen Problemfall der gekoppelten Werkzeugeinheit zu erkennen und somit zu lösen oder sogar von vornherein zu vermeiden. Die typabhängige Steuerart der Antriebseinheit wird durch das insbesondere mittelbare Bestimmen des Typs der gekoppelten Werkzeugeinheit ermöglicht.

## Patentansprüche

1. Verfahren zum typabhängigen Betreiben einer elektrischen Antriebseinheit (AE), wobei die Antriebseinheit (AE) zum Koppeln und Antreiben einer Werkzeugeinheit (WE) ausgebildet ist, wobei die Werkzeugeinheit (WE) aus einer Menge von verschiedenen Typen von Werkzeugeinheiten (WE) ausgewählt ist, wobei die Menge mindestens eine rotatorische Werkzeugeinheit (RWE) und mindestens eine nicht-rotatorische Werkzeugeinheit (NRWE) aufweist, wobei das Verfahren die Schritte aufweist:
a) Antreiben einer gekoppelten Werkzeugeinheit (WE) durch die Antriebseinheit (AE),
b) Erfassen von Betriebsdaten (BD) der Antriebseinheit (AE) während des Antreibens,
c) Bestimmen basierend auf den erfassten Betriebsdaten (BD), ob die gekoppelte Werkzeugeinheit (WE) eine rotatorische Werkzeugeinheit (RWE) oder eine nicht-rotatorische Werkzeugeinheit (NRWE) ist, und
d) Steuern der Antriebseinheit (AE) in einer Rotationssteuerart, wenn die gekoppelte Werkzeugeinheit (WE) als eine rotatorische Werkzeugeinheit (RWE) bestimmt ist, oder einer Nicht-Rotationssteuerart, wenn die gekoppelte Werkzeugeinheit (WE) als eine nicht-rotatorische Werkzeugeinheit (NRWE) bestimmt ist.

2. Verfahren nach Anspruch 1,
- wobei der Schritt b) aufweist: Erfassen von Betriebsdaten (BD) in Form eines zeitlichen Drehzahl-, Strom-, Spannungs- und/oder Leistungsverlaufs (nA) der Antriebseinheit (AE),
- wobei der Schritt c) aufweist: Bestimmen, dass die gekoppelte Werkzeugeinheit (WE) eine rotatorische Werkzeugeinheit (RWE) ist, wenn der erfasste zeitliche Drehzahl-, Strom-, Spannungs- und/oder Leistungsverlauf (nA) frei von einer periodischen Schwingung (PDS) ist, oder eine nicht-rotatorische Werkzeugeinheit (NRWE) ist, wenn der erfasste zeitliche Drehzahl-, Strom-, Spannungs- und/oder Leistungsverlauf (nA) eine periodische Schwingung (PDS) aufweist.

3. Verfahren nach einem der vorhergehenden Ansprüche, wobei,
- falls in Schritt c) bestimmt wird, dass die gekoppelte Werkzeugeinheit (WE) eine nicht-rotatorische Werkzeugeinheit (NRWE) ist,
- wobei die Typen eine erste Werkzeugeinheit (HL) mit einer ersten Übersetzung (i1) und eine zweite Werkzeugeinheit (SP) mit einer zweiten, von der ersten verschiedenen Übersetzung (i2) aufweisen,
- im Schritt b) Betriebsdaten (BD) in Form eines zeitlichen Drehzahl-, Strom-, Spannungs-und/oder Leistungsverlaufs (nA) der Antriebseinheit (AE) erfasst werden,
- im Schritt c) eine Frequenz (fSig) einer periodischen Schwingung (PDS) und eine Drehzahl (nA') aus dem erfassten zeitlichen Drehzahl-, Strom-, Spannungs- und/oder Leistungsverlauf (nA) bestimmt werden,
eine Übersetzung (i) aus der bestimmten Frequenz (fSig) und der bestimmten Drehzahl (nA') bestimmt wird, und
bestimmt wird, dass die gekoppelte Werkzeugeinheit (WE) eine erste Werkzeugeinheit (HL) ist, wenn die bestimmte Übersetzung (i) in einem ersten Übersetzungsbereich (i1) liegt, oder eine zweite Werkzeugeinheit (SP) ist, wenn die bestimmte Übersetzung (i) in einem zweiten, von dem ersten verschiedenen Übersetzungsbereich (i2) liegt, und
- im Schritt d) die Antriebseinheit (AE) in einer ersten Werkzeugsteuerart, wenn die gekoppelte Werkzeugeinheit (WE) als eine erste Werkzeugeinheit (HL) bestimmt ist, oder einer zweiten Werkzeugsteuerart gesteuert wird, wenn die gekoppelte Werkzeugeinheit (WE) als eine zweite Werkzeugeinheit (SP) bestimmt ist.

4. Verfahren nach Anspruch 3,
- wobei die erste Werkzeugeinheit (HL) eine Heckenschere (HL) ist und die erste Werkzeugsteuerart eine Heckenscherensteuerart ist und/oder
- wobei die zweite Werkzeugeinheit (SP) ein Spezialernter ist und die zweite Werkzeugsteuerart eine Spezialerntersteuerart ist.

5. Verfahren nach einem der vorhergehenden Ansprüche, wobei,
- falls in Schritt c) bestimmt wird, dass die gekoppelte Werkzeugeinheit (WE) eine rotatorische Werkzeugeinheit (RWE) ist,
- wobei die Typen eine Säge (HT) aufweisen,
- im Schritt b) Betriebsdaten (BD) in Form eines zeitlichen Drehzahl-, Strom-, Spannungs-und/oder Leistungsverlaufs (PA) der Antriebseinheit (AE) erfasst werden,
- im Schritt c) bestimmt wird, dass die gekoppelte Werkzeugeinheit (WE) eine Säge (HT) ist, wenn der erfasste zeitliche Drehzahl-, Strom-, Spannungs- und/oder Leistungsverlauf (PA) eine dynamische Schwankung (PLS) aufweist, und
- im Schritt d) die Antriebseinheit (AE) in einer Sägesteuerart gesteuert wird, wenn die gekoppelte Werkzeugeinheit (WE) als eine Säge (HT) bestimmt ist.

6. Verfahren nach einem der vorhergehenden Ansprüche, wobei,
- falls in Schritt c) bestimmt wird, dass die gekoppelte Werkzeugeinheit (WE) eine rotatorische Werkzeugeinheit (RWE) ist und dass die erfassten Betriebsdaten (BD) keine dynamische Schwankung aufweisen,
- wobei die Typen ein Blasgerät (BG) aufweisen,
- im Schritt b) Betriebsdaten (BD) in Form eines zeitlichen Drehzahlverlaufs (nA) und eines zeitlichen Strom-, Spannungs- und/oder Leistungsverlaufs (PA) der Antriebseinheit (AE) erfasst werden,
- im Schritt c) bestimmt wird, dass die gekoppelte Werkzeugeinheit (WE) kein Blasgerät (BG) ist, wenn der erfasste zeitliche Strom-, Spannungs- und/oder Leistungsverlauf (PA) eine Änderung (PCH) bei zeitlich konstanter Drehzahl (nA) aufweist, und
- im Schritt d) die Antriebseinheit (AE) in einer Nicht-Blasgerätsteuerart gesteuert wird, wenn die gekoppelte Werkzeugeinheit (WE) als kein Blasgerät (BG) bestimmt ist.

7. Verfahren nach einem der vorhergehenden Ansprüche, wobei,
- falls in Schritt c) bestimmt wird, dass die gekoppelte Werkzeugeinheit (WE) eine rotatorische Werkzeugeinheit (RWE) ist und dass die erfassten Betriebsdaten (BD) keine dynamische Schwankung und eine Änderung (PCH) bei zeitlich konstanter Drehzahl (nA) aufweisen,
- wobei die Typen eine Werkzeugeinheit (FCS, FCB, FSB) mit einer flexiblen Werkzeugwelle (FAW) aufweisen,
- im Schritt b) Betriebsdaten (BD) in Form eines zeitlichen Drehzahlverlaufs (nA) der Antriebseinheit (AE) erfasst werden,
- im Schritt c) bestimmt wird, dass die gekoppelte Werkzeugeinheit (WE) eine Werkzeugeinheit (FCS, FCB, FSB) mit einer flexiblen Werkzeugwelle (FAW) ist, wenn der erfasste zeitliche Drehzahlverlauf (nA) in einem bestimmten Drehzahlbereich (DZB) mindestens einen Unterschwinger (US) aufweist, und
- im Schritt d) die Antriebseinheit (AE) in einer Flexwellensteuerart gesteuert wird, wenn die gekoppelte Werkzeugeinheit (WE) als eine Werkzeugeinheit (FCS, FCB, FSB) mit einer flexiblen Werkzeugwelle (FAW) bestimmt ist.

8. Verfahren nach einem der vorhergehenden Ansprüche, wobei,
- falls in Schritt c) bestimmt wird, dass die gekoppelte Werkzeugeinheit (WE) eine rotatorische Werkzeugeinheit (RWE) ist und dass die erfassten Betriebsdaten (BD) keine dynamische Schwankung, eine Änderung (PCH) bei zeitlich konstanter Drehzahl (nA) und in einem bestimmten Drehzahlbereich (DZB) keinen Unterschwinger aufweisen,
- wobei die Typen einen Faden-Freischneider (FSF) oder einen ersten Schneideblatt-Freischneider (FSMkl), einen zweiten Schneideblatt-Freischneider (FSMgr) oder eine bodengeführte Werkzeugeinheit (KW, KB, BF) aufweisen,
- im Schritt b) Betriebsdaten (BD) in Form eines zeitlichen Drehzahlverlaufs (nA) und eines zeitlichen Stromverlaufs (IA) der Antriebseinheit (AE) erfasst werden,
- im Schritt c) ein Massenträgheitsmoment (J) aus dem erfassten zeitlichen Drehzahlverlauf (nA) und dem erfassten zeitlichen Stromverlauf (IA) bestimmt wird, und bestimmt wird, dass die gekoppelte Werkzeugeinheit (WE) ein Faden-Freischneider (FSF) oder ein erster Schneideblatt-Freischneider (FSMkl) ist, wenn das bestimmte Massenträgheitsmoment (J) in einem ersten Massenträgheitsmomentbereich (J1) liegt, oder ein zweiter Schneideblatt-Freischneider (FSMgr) ist, wenn das bestimmte Massenträgheitsmoment (J) in einem zweiten, von dem ersten verschiedenen Massenträgheitsmomentbereich (J2) liegt, oder eine bodengeführte Werkzeugeinheit (KW, KB, BF) ist, wenn das bestimmte Massenträgheitsmoment (J) in einem dritten, von dem ersten und zweiten verschiedenen Massenträgheitsmomentbereich (J3) liegt, und
- im Schritt d) die Antriebseinheit (AE) in einer ersten Freischneidersteuerart, wenn die gekoppelte Werkzeugeinheit (WE) als ein Faden-Freischneider (FSF) oder ein erster Schneideblatt-Freischneider (FSMkl) bestimmt ist, oder einer zweiten Freischneidersteuerart, wenn die gekoppelte Werkzeugeinheit (WE) als ein zweiter Schneideblatt-Freischneider (FSMgr) bestimmt ist, oder einer Bodensteuerart gesteuert wird, wenn die gekoppelte Werkzeugeinheit (WE) als eine bodengeführte Werkzeugeinheit (KW, KB, BF) bestimmt ist.

9. Verfahren nach Anspruch 8, wobei,
- falls in Schritt c) bestimmt wird, dass die gekoppelte Werkzeugeinheit (WE) ein Faden-Freischneider (FSF) oder ein erster Schneideblatt-Freischneider (FSMkl) ist,
- im Schritt b) Betriebsdaten (BD) in Form eines zeitlichen Leistungsverlaufs (PA) der Antriebseinheit (AE) erfasst werden,
- im Schritt c) eine Last (LT) aus dem erfassten zeitlichen Leistungsverlauf (PA) über dem erfassten zeitlichen Drehzahlverlauf (nA) bestimmt wird, und
bestimmt wird, dass die gekoppelte Werkzeugeinheit (WE) ein Faden-Freischneider (FSF) ist, wenn die bestimmte Last (LT) in einem ersten Lastbereich (LT1) liegt, oder ein erster Schneideblatt-Freischneider (FSMkl) ist, wenn die bestimmte Last (LT) in einem zweiten, von dem ersten verschiedenen Lastbereich (LT2) liegt, und
- im Schritt d) die Antriebseinheit (AE) in einer Faden-Freischneidersteuerart, wenn die gekoppelte Werkzeugeinheit (WE) als ein Faden-Freischneider (FSF) bestimmt ist, oder einer Schneideblatt-Freischneidersteuerart gesteuert wird, wenn die gekoppelte Werkzeugeinheit (WE) als ein erster Schneideblatt-Freischneider (FSMkl) bestimmt ist.

10. Verfahren nach einem der vorhergehenden Ansprüche, wobei,
- falls in Schritt c) bestimmt wird, dass die gekoppelte Werkzeugeinheit (WE) eine rotatorische Werkzeugeinheit (RWE) ist und dass die erfassten Betriebsdaten (BD) keine dynamische Schwankung und keine Änderung bei zeitlich konstanter Drehzahl (nA) aufweisen,
- wobei die Typen ein Blasgerät (BG) aufweisen,
- im Schritt b) Betriebsdaten (BD) in Form eines zeitlichen Drehzahlverlaufs (nA), eines zeitlichen Stromverlaufs (IA) und eines zeitlichen Leistungsverlaufs (PA) der Antriebseinheit (AE) erfasst werden,
- im Schritt c) ein Massenträgheitsmoment (J) aus dem erfassten zeitlichen Drehzahlverlauf (nA) und dem erfassten zeitlichen Stromverlauf (IA) bestimmt wird,
eine Last (LT) aus dem erfassten zeitlichen Leistungsverlauf (PA) über dem erfassten zeitlichen Drehzahlverlauf (nA) bestimmt wird, und
bestimmt wird, dass die gekoppelte Werkzeugeinheit (WE) ein Blasgerät (BG) ist, wenn das bestimmte Massenträgheitsmoment (J) in einem ersten Massenträgheitsmomentbereich (J1) liegt und wenn die bestimmte Last (LT) in einem dritten Lastbereich (LT3) liegt, und
- im Schritt d) die Antriebseinheit (AE) in einer Blasgerätsteuerart gesteuert wird, wenn die gekoppelte Werkzeugeinheit (WE) als ein Blasgerät (BG) bestimmt ist.

11. System (SY), wobei das System (SY) aufweist:
- eine elektrische Antriebseinheit (AE), wobei die Antriebseinheit (AE) zum Koppeln und Antreiben einer Werkzeugeinheit (WE) ausgebildet ist, wobei die Werkzeugeinheit (WE) aus einer Menge von verschiedenen Typen von Werkzeugeinheiten (WE) ausgewählt ist, wobei die Menge mindestens eine rotatorische Werkzeugeinheit (RWE) und mindestens eine nicht-rotatorische Werkzeugeinheit (NRWE) aufweist,
- eine Erfassungseinrichtung (EE), wobei die Erfassungseinrichtung (EE) zum Erfassen von Betriebsdaten (BD) der Antriebseinheit (AE) während des Antreibens ausgebildet ist,
- eine Bestimmungseinrichtung (BE), wobei die Bestimmungseinrichtung (BE) zum Bestimmen basierend auf den erfassten Betriebsdaten (BD), ob die gekoppelte Werkzeugeinheit (WE) eine rotatorische Werkzeugeinheit (RWE) oder eine nicht-rotatorische Werkzeugeinheit (NRWE) ist, ausgebildet ist, und
- eine Steuerungseinrichtung (SE), wobei die Steuerungseinrichtung (SE) zum Steuern der Antriebseinheit (AE) in einer Rotationssteuerart, wenn die gekoppelte Werkzeugeinheit (WE) als eine rotatorische Werkzeugeinheit (RWE) bestimmt ist, oder einer Nicht-Rotationssteuerart, wenn die gekoppelte Werkzeugeinheit (WE) als eine nicht-rotatorische Werkzeugeinheit (NRWE) bestimmt ist, ausgebildet ist.

12. System (SY) nach Anspruch 11, wobei das System (SY) aufweist:
- mindestens eine Werkzeugeinheit (WE), die zum Koppeln und Antreiben durch die Antriebseinheit (AE) ausgebildet ist.

## Claims

1. Method for type-specific operating of an electric drive unit (AE), wherein the drive unit (AE) is configured for coupling and driving of a tool unit (WE), wherein the tool unit (WE) is selected from a set of different types of tool units (WE), wherein the set includes at least one rotatory tool unit (RWE) and at least one non-rotatory tool unit (NRWE), the method comprising the steps:
a) driving of a coupled tool unit (WE) by the drive unit (AE),
b) identifying operating data (BD) of the drive unit (AE) during the driving procedure,
c) determining, based on the identified operating data (BD), whether the coupled tool unit (WE) is a rotatory tool unit (RWE) or a non-rotatory tool unit (NRWE), and
d) controlling the drive unit (AE) in a rotation control mode if the coupled tool unit (WE) is determined to be a rotatory tool unit (RWE), or in a non-rotation control mode if the coupled tool unit (WE) is determined to be a non-rotatory tool unit (NRWE).

2. Method according to claim 1,
- wherein the step b) comprises: identifying operating data (BD) in the form of a temporal rotation speed, current, voltage and/or power characteristic (nA) of the drive unit (AE),
- wherein the step c) comprises: determining that the coupled tool unit (WE) is a rotatory tool unit (RWE) if the identified temporal rotation speed, current, voltage and/or power characteristic (nA) is free of a periodic oscillation (PDS), or is a non-rotatory tool unit (NRWE) if the identified temporal rotation speed, current, voltage and/or power characteristic (nA) has a periodic oscillation (PDS).

3. Method according to any of the preceding claims, wherein,
- if the determination in step c) reveals that the coupled tool unit (WE) is a non-rotatory tool unit (NRWE),
- wherein the types include a first tool unit (HL) with a first transmission (i1) and a second tool unit (SP) with a second transmission (i2) differing from the first transmission,
- in step b) operating data (BD) in the form of a temporal rotation speed, current, voltage and/or power characteristic (nA) of the drive unit (AE) are identified,
- in step c) a frequency (fSig) of a periodic oscillation (PDS) and a rotation speed (nA') are determined from the identified temporal rotation speed, current, voltage and/or power characteristic (nA),
a transmission (i) is determined from the determined frequency (fSig) and the determined rotation speed (nA'), and
it is determined that the coupled tool unit (WE) is a first tool unit (HL) if the determined transmission (i) is in a first transmission range (i1), or is a second tool unit (SP) if the determined transmission (i) is in a second transmission range (i2) differing from the first transmission range, and
- in step d) the drive unit (AE) is controlled in a first tool control mode if the coupled tool unit (WE) is determined to be a first tool unit (HL), or in a second tool control mode if the coupled tool unit (WE) is determined to be a second tool unit (SP).

4. Method according to claim 3,
- wherein the first tool unit (HL) is hedge shears (HL) and the first tool control mode is a hedge shears control mode, and/or
- wherein the second tool unit (SP) is a special harvester and the second tool control mode is a special harvester control mode.

5. Method according to any of the preceding claims, wherein,
- if the determination in step c) reveals that the coupled tool unit (WE) is a rotatory tool unit (RWE),
- wherein the types include a saw (HT),
- in step b) operating data (BD) in the form of a temporal rotation speed, current, voltage and/or power characteristic (PA) of the drive unit (AE) are identified,
- in step c) it is determined that the coupled tool unit (WE) is a saw (HT) if the identified temporal rotation speed, current, voltage and/or power characteristic (PA) has a dynamic oscillation (PLS), and
- in step d) the drive unit (AE) is controlled in a saw control mode if the coupled tool unit (WE) is determined to be a saw (HT).

6. Method according to any of the preceding claims, wherein,
- if the determination in step c) reveals that the coupled tool unit (WE) is a rotatory tool unit (RWE) and that the identified operating data (BD) do not have a dynamic oscillation,
- wherein the types include a blower device (BG),
- in step b) operating data (BD) in the form of a temporal rotation speed characteristic (nA) and a temporal current, voltage and/or power characteristic (PA) of the drive unit (AE) are identified,
- in step c) it is determined that the coupled tool unit (WE) is not a blower device (BG) if the identified temporal current, voltage and/or power characteristic (PA) presents a variation (PCH) with temporally constant rotation speed (nA), and
- in step d) the drive unit (AE) is controlled in a non-blower device control mode if the coupled tool unit (WE) is determined not to be a blower device (BG).

7. Method according to any of the preceding claims, wherein,
- if the determination in step c) reveals that the coupled tool unit (WE) is a rotatory tool unit (RWE) and that the identified operating data (BD) do not have a dynamic oscillation and have a variation (PCH) with temporally constant rotation speed (nA),
- wherein the types include a tool unit (FCS, FCB, FSB) with a flexible tool shaft (FAW),
- in step b) operating data (BD) in the form of a temporal rotation speed characteristic (nA) of the drive unit (AE) are identified,
- in step c) it is determined that the coupled tool unit (WE) is a tool unit (FCS, FCB, FSB) with a flexible tool shaft (FAW) if the identified temporal rotation speed characteristic (nA) presents at least one undershooting (US) in a certain rotation speed range (DZB), and
- in step d) the drive unit (AE) is controlled in a flexshaft control mode if the coupled tool unit (WE) is determined to be a tool unit (FCS, FCB, FSB) with a flexible tool shaft (FAW).

8. Method according to any of the preceding claims, wherein,
- if the determination in step c) reveals that the coupled tool unit (WE) is a rotatory tool unit (RWE) and that the identified operating data (BD) do not have a dynamic oscillation, have a variation (PCH) with temporally constant rotation speed (nA) and do not have an undershooting in a certain rotation speed range (DZB),
- wherein the types include a wire brush cutter (FSF), or a first cutting-blade brush cutter (FSMkl), a second cutting-blade brush cutter (FSMgr), or a floor-guided tool unit (KW, KB, BF),
- in step b) operating data (BD) in the form of a temporal rotation speed characteristic (nA) and a temporal current characteristic (IA) of the drive unit (AE) are identified,
- in step c) a mass moment of inertia (J) is determined from the identified temporal rotation speed characteristic (nA) and the identified temporal current characteristic (IA), and
it is determined that the coupled tool unit (WE) is a wire brush cutter (FSF) or a first cutting-blade brush cutter (FSMkl) if the determined mass moment of inertia (J) is within a first mass moment of inertia range (J1), or is a second cutting-blade brush cutter (FSMgr) if the determined mass moment of inertia (J) is within a second mass moment of inertia range (J2) differing from the first mass moment of inertia range, or is a floor-guided tool unit (KW, KB, BF) if the determined mass moment of inertia (J) is within a third mass moment of inertia range (J3) differing from the first and the second mass moment of inertia ranges, and
- in step d) the drive unit (AE) is controlled in a first brush cutter control mode if the coupled tool unit (WE) is determined to be a wire brush cutter (FSF) or a first cutting-blade brush cutter (FSMkl), or in a second brush cutter control mode if the coupled tool unit (WE) is determined to be a second cutting-blade brush cutter (FSMgr), or is controlled in a floor control mode if the coupled tool unit (WE) is determined to be a floor-guided tool unit (KW, KB, BF).

9. Method according to claim 8, wherein,
- if the determination in step c) reveals that the coupled tool unit (WE) is a wire brush cutter (FSF) or a first cutting-blade brush cutter (FSMkl),
- in step b) operating data (BD) in the form of a temporal power characteristic (PA) of the drive unit (AE) are identified,
- in step c) a load (LT) is determined from the identified temporal power characteristic (PA) on the identified temporal rotation speed characteristic (nA), and
it is determined that the coupled tool unit (WE) is a wire brush cutter (FSF) if the determined load (LT) is within a first load range (LT1), or is a first cutting-blade brush cutter (FSMkl) if the determined load (LT) is within a second load range (LT2) differing from the first load range, and
- in step d) the drive unit (AE) is controlled in a wire brush cutter control mode if the coupled tool unit (WE) is determined to be a wire brush cutter (FSF), or is controlled in a cutting-blade brush cutter control mode if the coupled tool unit (WE) is determined to be a first cutting-blade brush cutter (FSMkl).

10. Method according to any of the preceding claims, wherein,
- if the determination in step c) reveals that the coupled tool unit (WE) is a rotatory tool unit (RWE) and that the identified operating data (BD) do not have a dynamic oscillation and do not have a variation with temporally constant rotation speed (nA),
- wherein the types include a blower device (BG),
- in step b) operating data (BD) in the form of a temporal rotation speed characteristic (nA), a temporal current characteristic (IA) and a temporal power characteristic (PA) of the drive unit (AE) are identified,
- in step c) a mass moment of inertia (J) is determined from the identified temporal rotation speed characteristic (nA) and the identified temporal current characteristic (IA),
a load (LT) is determined from the identified temporal power characteristic (PA) on the identified temporal rotation speed characteristic (nA), and
it is determined that the coupled tool unit (WE) is a blower device (BG) if the determined mass moment of inertia (J) is within a first mass moment of inertia range (J1) and if the determined load (LT) is within a third load range (LT3), and
- in step d) the drive unit (AE) is controlled in a blower device control mode if the coupled tool unit (WE) is determined to be blower device (BG).

11. System (SY), the system (SY) comprising:
- an electric drive unit (AE), wherein the drive unit (AE) is configured for coupling and driving of a tool unit (WE), wherein the tool unit (WE) is selected from a set of different types of tool units (WE), wherein the set includes at least one rotatory tool unit (RWE) and at least one non-rotatory tool unit (NRWE),
- an identification device (EE), wherein the identification device (EE) is configured for identifying operating data (BD) of the drive unit (AE) during the driving procedure,
- a determination device (BE), wherein the determination device (BE) is configured for determining, based on the identified operating data (BD), whether the coupled tool unit (WE) is a rotatory tool unit (RWE) or a non-rotatory tool unit (NRWE), and
- a controller device (SE), wherein the controller device (SE) is configured for controlling the drive unit (AE) in a rotation control mode if the coupled tool unit (WE) is determined to be a rotatory tool unit (RWE), or in a non-rotation control mode if the coupled tool unit (WE) is determined to be a non-rotatory tool unit (NRWE).

12. System (SY) according to claim 11, the system (SY) comprising:
- at least one tool unit (WE) which is configured for coupling and driving by the drive unit (AE).

## Revendications

1. Procédé de fonctionnement, en fonction du type, d'une unité d'entraînement électrique (AE), l'unité d'entraînement (AE) étant conçue pour s'accoupler à une unité d'outil (WE) et l'entraîner, l'unité d'outil (WE) étant sélectionnée parmi un ensemble de différents types d'unités d'outils (WE), l'ensemble comprenant au moins une unité d'outil rotative (RWE) et au moins une unité d'outil non-rotative (NRWE), le procédé comprenant les étapes suivantes :
a) entraîner une unité d'outil accouplée (WE) au moyen de l'unité d'entraînement (AE),
b) acquérir des données de fonctionnement (BD) de l'unité d'entraînement (AE) pendant l'entraînement,
c) déterminer, sur la base des données de fonctionnement acquises (BD), si l'unité d'outil accouplée (WE) est une unité d'outil rotative (RWE) ou une unité d'outil non-rotative (NRWE), et
d) commander l'unité d'entraînement (AE) dans un mode de commande en rotation si l'unité d'outil accouplée (WE) est déterminée comme étant une unité d'outil rotative (RWE), ou un mode de commande sans rotation si l'unité d'outil accouplée (WE) est déterminée comme étant une unité d'outil non-rotative (NRWE).

2. Procédé selon la revendication 1,
- l'étape b) comportant l'acquisition de données de fonctionnement (BD) sous la forme d'une variation temporelle de vitesse de rotation, de courant, de tension et/ou de puissance (nA) de l'unité d'entraînement (AE),
- l'étape c) comportant la détermination du fait que l'unité d'outil accouplée (WE) est une unité d'outil rotative (RWE) si la variation temporelle de vitesse de rotation, de courant, de tension et/ou de puissance (nA) qui a été acquise est dépourvue d'oscillation périodique (PDS), ou est une unité d'outil non-rotative (NRWE) si la variation temporelle de vitesse de rotation, de courant, de tension et/ou de puissance (nA) qui a été acquise comporte une oscillation périodique (PDS).

3. Procédé selon l'une des revendications précédentes,
- s'il est déterminé à l'étape c) que l'unité d'outil accouplée (WE) est une unité d'outil non-rotative (NRWE),
- les types comportant une première unité d'outil (HL) présentant un premier rapport de transmission (i1) et une deuxième unité d'outil (SP) présentant un deuxième rapport de transmission (i2) différent du premier,
- à l'étape b) les données de fonctionnement (BD) étant acquises sous la forme d'une variation temporelle de vitesse, de courant, de tension et/ou de puissance (nA) de l'unité d'entraînement (AE),
- à l'étape c) une fréquence (fSig) d'une oscillation périodique (PDS) et une vitesse de rotation (nA') étant déterminées à partir de la variation temporelle de vitesse de rotation, de courant, de tension et/ou de puissance (nA) qui a été acquise,
- un rapport de transmission (i) étant déterminé à partir de la fréquence déterminée (fSig) et de la vitesse déterminée (nA'), et
une détermination étant effectuée du fait que l'unité d'outil accouplée (WE) est une première unité d'outil (HL) si le rapport de transmission déterminé (i) est dans une première plage de rapport de transmission (il), ou une deuxième unité d'outil (SP) si le rapport de transmission déterminé (i) est dans une deuxième plage de rapport de transmission (i2) différente de la première, et
- à l'étape d) l'unité d'entraînement (AE) étant commandée dans un premier mode de commande d'outil si l'unité d'outil accouplée (WE) est déterminée comme étant une première unité d'outil (HL), ou dans un deuxième mode de commande d'outil lorsque l'unité d'outil accouplée (WE) est déterminée comme étant une deuxième unité d'outil (SP).

4. Procédé selon la revendication 3,
- la première unité d'outil (HL) étant un taille-haie (HL) et le premier type de commande d'outil étant un type de commande de taille-haie et/ou
- la deuxième unité d'outil (SP) étant une récolteuse spéciale et le deuxième type de commande d'outil étant un type de commande de récolteuse spéciale.

5. Procédé selon l'une des revendications précédentes,
- s'il est déterminé à l'étape c) que l'unité d'outil accouplée (WE) est une unité d'outil rotative (RWE),
- les types comportant une scie (HT),
- à l'étape b) les données de fonctionnement (BD) étant acquises sous la forme d'une variation temporelle de vitesse de rotation, de courant, de tension et/ou de puissance (PA) de l'unité d'entraînement (AE),
- à l'étape c), une détermination étant effectuée du fait que l'unité d'outil accouplée (WE) est une scie (HT) si la variation temporelle de vitesse de rotation, de courant, de tension et/ou de puissance (PA) qui a été acquise comporte une fluctuation dynamique (PLS), et
- à l'étape d) l'unité d'entraînement (AE) étant commandée dans un mode de commande de scie si l'unité d'outil accouplée (WE) est déterminée comme étant une scie (HT).

6. Procédé selon l'une des revendications précédentes,
- s'il est déterminé à l'étape c) que l'unité d'outil accouplée (WE) est une unité d'outil rotative (RWE) et que les données de fonctionnement acquises (BD) ne comportent pas de fluctuation dynamique,
- les types comportant une soufflante (BG),
- à l'étape b) les données de fonctionnement (BD) étant acquises sous la forme d'une variation temporelle de vitesse de rotation (nA) et d'une variation temporelle de courant, de tension et/ou de puissance (PA) de l'unité d'entraînement (AE),
- à l'étape c) une détermination étant effectuée du fait que l'unité d'outil accouplée (WE) n'est pas une soufflante (BG) si la variation temporelle de courant, de tension et/ou de puissance (PA) qui a été acquise présente un changement (PCH) à vitesse de rotation (nA) constante, et
- à l'étape d) l'unité d'entraînement (AE) étant commandée dans un mode de commande sans soufflante si l'unité d'outil accouplée (WE) est déterminée comme n'étant pas une soufflante (BG).

7. Procédé selon l'une des revendications précédentes,
- s'il est déterminé à l'étape c) que l'unité d'outil accouplée (WE) est une unité d'outil rotative (RWE) et que les données de fonctionnement acquises (BD) ne comportent pas de fluctuation dynamique et comportent un changement (PCH) à vitesse constante (nA),
- les types comportant une unité d'outil (FCS, FCB, FSB) pourvue d'un arbre d'outil flexible (FAW),
- à l'étape b) les données de fonctionnement (BD) étant acquises sous la forme d'une variation temporelle de vitesse (nA) de l'unité d'entraînement (AE),
- à l'étape c) une détermination étant effectuée du fait que l'unité d'outil accouplée (WE) est une unité d'outil (FCS, FCB, FSB) pourvue d'un arbre d'outil flexible (FAW) si la variation temporelle de vitesse (nA) acquise dans une plage de vitesse de rotation (DZB) déterminée comporte au moins une sous-oscillation (US), et
- à l'étape d) l'unité d'entraînement (AE) étant commandée dans un mode de commande d'arbre flexible si l'unité d'outil accouplée (WE) est déterminée comme étant une unité d'outil (FCS, FCB, FSB) pourvue d'un arbre d'outil flexible (FAW).

8. Procédé selon l'une des revendications précédentes,
- s'il est déterminé à l'étape c) que l'unité d'outil accouplée (WE) est une unité d'outil rotative (RWE) et que les données de fonctionnement acquises (BD) ne comportent pas de fluctuation dynamique, comportent un changement (PCH) à vitesse constante (nA) et, dans une plage de vitesse de rotation (DZB) déterminée, ne comportent pas de sous-oscillation,
- les types comportant une tondeuse à fil (FSF) ou une première tondeuse à lame coupante (FSMkl), une deuxième tondeuse à lame coupante (FSMgr) ou une unité d'outil à guidage au sol (KW, KB, BF),
- à l'étape b) les données de fonctionnement (BD) étant acquises sous la forme d'une variation temporelle de vitesse de rotation (nA) et d'une variation temporelle de courant (IA) de l'unité d'entraînement (AE),
- à l'étape c), un moment d'inertie de masse (J) étant déterminé à partir de la variation temporelle de vitesse de rotation (nA) acquise et de la variation temporelle de courant (IA) acquise, et une détermination étant effectuée du fait que l'unité d'outil accouplée (WE) est une tondeuse à fil (FSF) ou une première tondeuse à lame coupante (FSMkl) lorsque le moment d'inertie de masse (J) déterminé est dans une première plage de moment d'inertie de masse (Jl), ou une deuxième tondeuse à lame coupante (FSMgr) si le moment d'inertie de masse (J) déterminé est dans une deuxième plage de moment d'inertie de masse (J2) différente de la première, ou une unité d'outil à guidage au sol (KW, KB, BF) si le moment d'inertie de masse (J) déterminé est dans une troisième plage de moment d'inertie de masse (J3) différente de la première et de la deuxième, et
- à l'étape d) l'unité d'entraînement (AE) étant commandée dans un premier mode de commande de tondeuse lorsque l'unité d'outil accouplée (WE) est déterminée comme étant une tondeuse à fil (FSF) ou une première tondeuse à lame coupante (FSMkl), ou dans un deuxième type de commande de tondeuse si l'unité d'outil accouplée (WE) est déterminée comme étant une deuxième tondeuse à lame coupante (FSMgr), ou dans un type de commande au sol si l'unité d'outil accouplée (WE) est déterminée comme étant une unité d'outil à guidage au sol (KW, KB, BF).

9. Procédé selon la revendication 8,
- s'il est déterminé à l'étape c) que l'unité d'outil accouplée (WE) est une tondeuse à fil (FSF) ou une première tondeuse à lame coupante (FSMkl),
- à l'étape b) les données de fonctionnement (BD) étant acquises sous la forme d'une variation de puissance (PA) de l'unité d'entraînement (AE),
- à l'étape c) une charge (LT) étant déterminée à partir de la variation temporelle de puissance (PA) acquise via la variation temporelle de vitesse de rotation (nA) acquise, et
- une détermination étant effectuée du fait que l'unité d'outil accouplée (WE) est une tondeuse à fil (FSF) si la charge (LT) déterminée est dans une première plage de charge (LT1), ou une première tondeuse à lame coupante (FSMkl) si la charge (LT) déterminée est dans une deuxième plage de charge (LT2) différente de la première, et
- à l'étape d) l'unité d'entraînement (AE) étant commandée dans un mode de commande de tondeuse à fil si l'unité d'outil accouplée (WE) est déterminée comme étant une tondeuse à fil (FSF), ou dans un mode de commande de tondeuse à lame coupante si l'unité d'outil accouplée (WE) est déterminée comme étant une première tondeuse à lame coupante (FSMkl).

10. Procédé selon l'une des revendications précédentes,
- s'il est déterminé à l'étape c) que l'unité d'outil accouplée (WE) est une unité d'outil rotative (RWE) et que les données de fonctionnement acquises (BD) ne comportent aucune fluctuation dynamique et aucun changement à vitesse constante (nA),
- les types comportant une soufflante (BG),
- à l'étape b) les données de fonctionnement (BD) étant acquises sous la forme d'une variation temporelle de vitesse (nA), d'une variation temporelle de courant (IA) et d'une variation temporelle de puissance (PA) de l'unité d'entraînement (AE),
- à l'étape c), un moment d'inertie de masse (J) étant déterminé à partir de la variation temporelle (nA) acquise et de la variation temporelle de courant (IA) acquise,
une charge (LT) étant déterminée à partir de la variation temporelle de puissance (PA) acquise via la variation temporelle (nA) acquise, et
- une détermination étant effectuée du fait que l'unité d'outil accouplée (WE) est une soufflante (BG) si le moment d'inertie de masse déterminé (J) est dans une première plage de moment d'inertie de masse (J1) et si la charge déterminée (LT) est dans une troisième plage de charge (LT3), et
- à l'étape d) l'unité d'entraînement (AE) étant commandée dans un mode de commande de soufflante si l'unité d'outil accouplée (WE) est déterminée comme étant une soufflante (BG).

11. Système (SY), le système (SY) comportant :
- une unité d'entraînement électrique (AE), l'unité d'entraînement (AE) étant conçue pour s'accoupler à une unité d'outil (WE) et l'entraîner, l'unité d'outil (WE) étant sélectionnée parmi un ensemble de différents types d'unités d'outil (WE), l'ensemble comportant au moins une unité d'outil rotative (RWE) et au moins une unité d'outil non-rotative (NRWE),
- un dispositif d'acquisition (EE), le dispositif d'acquisition (EE) étant conçu pour acquérir des données de fonctionnement (BD) de l'unité d'entraînement (AE) pendant l'entraînement,
- un dispositif de détermination (BE), le dispositif de détermination (BE) étant conçu pour déterminer, sur la base des données de fonctionnement (BD) acquises, si l'unité d'outil accouplée (WE) est une unité d'outil rotative (RWE) ou une unité d'outil non-rotative (NRWE), et
- un dispositif de commande (SE), le dispositif de commande (SE) étant conçu pour commander l'unité d'entraînement (AE) dans un mode de commande en rotation si l'unité d'outil accouplée (WE) est déterminée comme une unité d'outil rotative (RWE), ou un mode de commande sans rotation si l'unité d'outil accouplée (WE) est déterminée comme une unité d'outil non-rotative (NRWE).

12. Système (SY) selon la revendication 11, dans lequel le système (SY) comprend :
- au moins une unité d'outil (WE), qui est conçue pour l'accouplement et l'entraînement par le biais de l'unité d'entraînement (AE).
